(19) Europäisches Patentamt
European Patent Office
Office européen des brevets

(11) Veröffentlichungsnummer: **0 079 858**
**B1**

(12) # EUROPÄISCHE PATENTSCHRIFT

(45) Veröffentlichungstag der Patentschrift: **27.12.85**

(51) Int. Cl.⁴: **C 09 B 29/33**, C 09 B 45/04, C 09 B 55/00 // D06P1/10

(21) Anmeldenummer: **82810480.2**

(22) Anmeldetag: **10.11.82**

(54) **Azofarbstoffe, Metallkomplexe dieser Farbstoffe, deren Herstellung und Verwendung.**

(30) Priorität: **16.11.81 CH 7353/81**

(43) Veröffentlichungstag der Anmeldung: **25.05.83 Patentblatt 83/21**

(45) Bekanntmachung des Hinweises auf die Patenterteilung: **27.12.85 Patentblatt 85/52**

(84) Benannte Vertragsstaaten: **CH DE FR GB LI**

(56) Entgegenhaltungen:
**FR - A - 1 054 885**
**FR - A - 1 108 146**
**FR - A - 1 109 393**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Püntener, Alois, Dr., Pulverweg 13, CH-4310 Rheinfelden (CH)**

**EP 0 079 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft metallisierbare Azofarbstoffe der Formel I

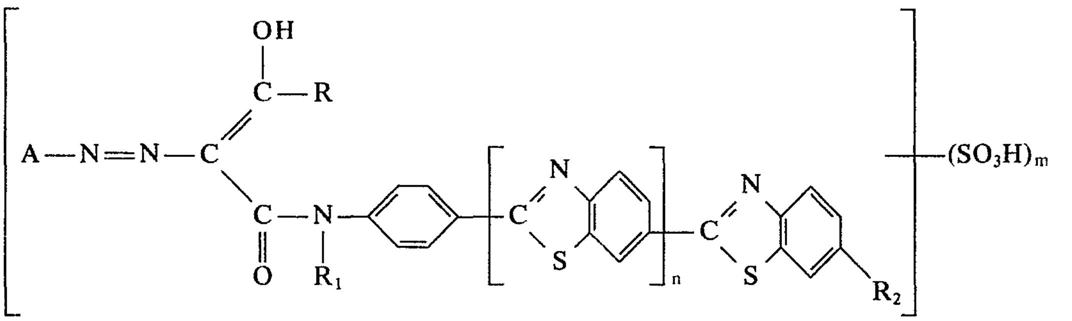

(I)

worin

A den Rest einer Diazokomponente der Benzol- oder Naphthalinreihe bedeutet, die in o-Stellung zur Azogruppe eine metallisierbare Hydroxygruppe trägt, und unsubstituiert ist, oder einen oder mehrere der folgenden Substituenten trägt: niedermolekulares Alkyl oder Alkoxy, Chlor, Brom, Nitro, Cyano, Sulfo, Alkylsulfonyl, Sulfamide, niedrigmolekulare Alkanoylamino-, Alkylsulfonylamino- und Alkoxycarbonylamino-, Sulfonylamino-, Aroylamino- und Arylsulfonylaminoreste oder die Azobenzol- oder Azonaphthalingruppe, wobei deren Arylgruppen wiederum wie oben beschrieben substituiert sein können,

R Methyl, Chlormethyl oder Phenyl, das durch $C_1$—$C_4$-Alkyl, $C_1$—$C_4$-Alkoxy oder Halogen substituiert sein kann,

$R_1$ Wasserstoff oder $C_1$—$C_4$-Alkyl,

$R_2$ Wasserstoff oder Methyl,

n 0 oder 1 und

m 0, 1, 2 oder 3 bedeutet,

sowie deren Metallkomplexe.

Der Rest A kann noch einen oder mehrere weitere Substituenten tragen, z. B. niedermolekulares Alkyl oder Alkoxy, Chlor, Brom, Nitro, Cyano, Sulfo, Alkylsulfonyl, wie z. B. Methylsulfonyl, Sulfamide, wie z. B. Sulfamid oder Sulfomethylamid, oder Acylamino. Unter niedermolekularen Alkyl- oder Alkoxygruppen sind solche mit 1 bis 6, vorzugsweise 1 bis 2 C-Atomen zu verstehen und mit »Acylamino« werden niedrigmolekulare Alkanoylamino-, Alkylsulfonylamino- und Alkoxycarbonylaminoreste sowie Sulfonylamino-, Aroylamino- und Arylsulfonylaminoreste bezeichnet. Außerdem kommen als Substituenten die Azobenzol- und die Azonaphthalingruppe in Frage, wobei deren Arylgruppen wiederum wie oben beschrieben substituiert sein können.

Der Rest A leitet sich beispielsweise von folgenden Aminen ab:

2-Amino-1-hydroxybenzol, 4-Chlor- und 4,6-Dichlor-2-amino-1-hydroxybenzol,
4- oder 5-Nitro-2-amino-1-hydroxybenzol,
4-Chlor-, 4-Methyl- und 4-Acetylamino-6-nitro-2-amino-1-hydroxybenzol,
6-Acetylamino- und 6-Chlor-4-nitro-2-amino-1-hydroxybenzol,
4-Cyan-2-amino-1-hydroxybenzol, 4-Sulfonamido-2-amino-1-hydroxybenzol,
1-Hydroxy-2-aminobenzol-4-sulfoanthranilid, 4-Methoxy-2-amino-1-hydroxybenzol,
4-Methoxy-5-chlor-2-amino-1-hydroxybenzol, 4-Methyl-2-amino-1-hydroxybenzol,
4-Chlor-5-nitro-2-amino-1-hydroxybenzol, 3,4,6-Trichlor-2-amino-1-hydroxybenzol,
6-Acetylamino-4-chlor-2-amino-1-hydroxybenzol, 4,6-Dinitro-2-amino-1-hydroxybenzol,
2-Amino-1-hydroxybenzol-4- oder -5-sulfonsäure,
4-Nitro-2-amino-1-hydroxybenzol-6-sulfosäure,
5-Nitro- oder 6-Nitro-2-amino-1-hydroxybenzol-4-sulfosäure,
4-Chlor-2-amino-1-hydroxybenzol-6-sulfosäure, 1-Amino-2-hydroxynaphthalin-4-sulfosäure,
1-Amino-2-hydroxy-6-nitronaphthalin-4-sulfosäure,
2-Amino-1-hydroxybenzol-4,6-disulfosäure, 4-Hydroxy-3-amino-azobenzol,
4-Hydroxy-3-amino-azobenzol-3′-sulfosäure, 4-Hydroxy-3-aminobenzol-azonaphthalin oder
6-Sulfo-1-(3-amino-4-hydroxyphenylazo)-naphthalin.

Statt der oben genannten Amine mit Hydroxygruppe kommen auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe bei der Metallisierung in eine

OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen ist A der Rest eines 1-Hydroxy-2-aminobenzols, welcher durch Chlor, Nitro und/oder Sulfosubstituiert ist, insbesondere der Rest eines 1-Hydroxy-2-aminonitrobenzols, welcher gegebenenfalls noch eine Sulfogruppe trägt.

R bedeutet vorzugsweise Methyl, $R_1$ ist vorzugsweise Wasserstoff und $R_2$ ist vorzugsweise Methyl.

Die bevorzugte Bedeutung von n ist 0, normalerweise liegen die Farbstoffe der Formel I und deren Metallkomplexe jedoch nicht in reiner Form vor, sondern es handelt sich um Mischungen aus Verbindungen, bei denen n gleich 0 ist, mit einem Anteil der Verbindungen, bei denen n gleich 1 ist. Dies ist durch die Synthese bedingt, bei der üblicherweise von Dehydrothio-p-toluidin ausgegangen wird, welches als Nebenprodukt Bis-dehydrothio-p-toluidin (Primulinbase) enthält.

Die Farbstoffe der Formel I enthalten 0 bis 3 Sulfogruppen, welche an beliebigen Positionen des Moleküls angeordnet sein können, vorzugsweise sind sie jedoch im Rest A und/oder in dem den Rest $R_2$ tragenden Phenylring angeordnet.

Die bevorzugten erfindungsgemäßen metallisierbaren Farbstoffe entsprechen der Formel II

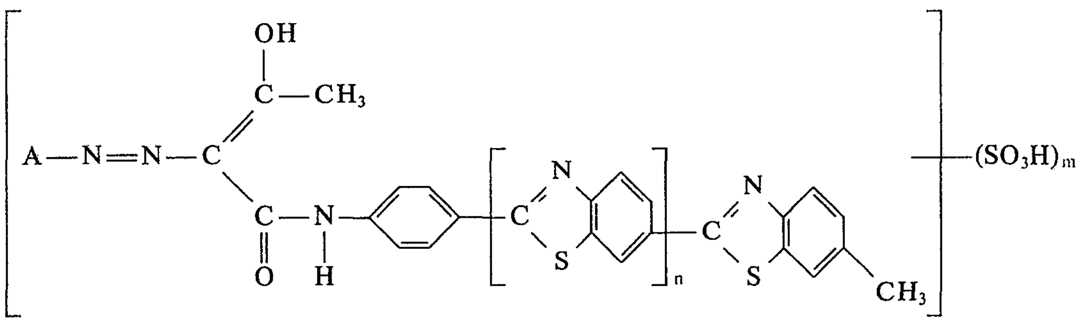

(II)

worin

A der Rest eines 1-Hydroxy-2-aminobenzols ist, welcher durch Chlor, Nitro und/oder Sulfo substituiert ist,
n 0 oder 1 und
m 1 oder 2 bedeutet.

Der bevorzugte Gegenstand der vorliegenden Erfindung sind Metallkomplexfarbstoffe, welche mindestens einen Azofarbstoff der oben angegebenen Formel I enthalten. Als Metall kommen dabei Schwermetalle, wie z. B. Kupfer, Eisen oder Nickel, vorzugsweise jedoch Kobalt oder Chrom, in Betracht und von besonderem Interesse sind die 1 : 2-Chrom- oder 1 : 2-Kobaltkomplexe, enthaltend mindestens einen Farbstoff der Formel I.

Diese Metallkomplexe entsprechen somit der Formel III

$$F_1—Me—F_2 \qquad (III)$$

worin

$F_1$ ein metallisierbarer Azofarbstoff der oben angegebenen Formel I,
Me Kobalt oder Chrom und
$F_2$ ein metallisierbarer Azofarbstoff der oben angegebenen Formel I, welcher mit $F_1$ identisch oder von $F_1$ verschieden sein kann, oder ein beliebiger metallisierbarer Azo- oder Azomethinfarbstoff ist.

Eine bevorzugte Gruppe von erfindungsgemäßen Metallkomplexfarbstoffen sind diejenigen der Formel IV

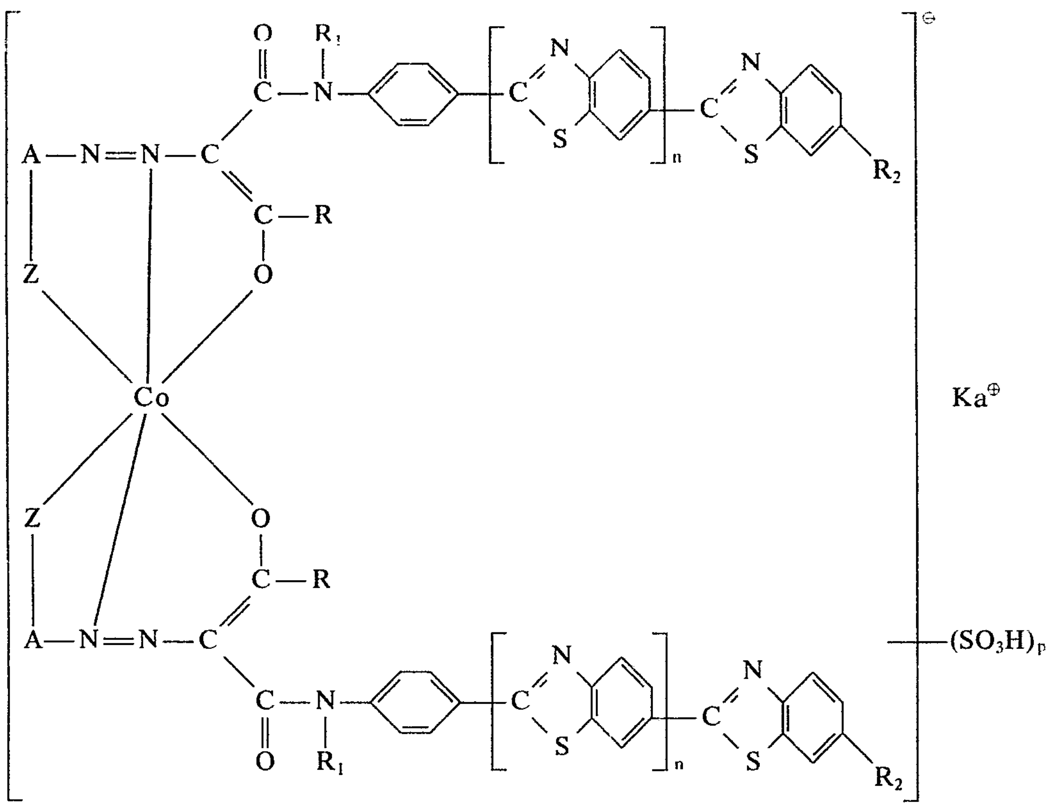

Ka$^{\oplus}$ (IV)

worin die Symbole A, R, $R_1$, $R_2$ und n die unter Formel I angegebenen Bedeutungen haben und

Z Sauerstoff,
p eine ganze Zahl zwischen 0 und 6 und
Ka$^{\oplus}$ ein Kation bedeutet.

Unter diesen sind diejenigen der Formel IV besonders geeignet, worin

A der Rest eines 1-Hydroxy-2-aminobenzols ist, welcher durch Chlor, Nitro und/oder Sulfo substituiert ist,
R Methyl,
$R_1$ Wasserstoff,
$R_2$ Methyl,
Z Sauerstoff,
n 1,
p eine ganze Zahl zwischen 0 und 6 und
Ka$^{\oplus}$ ein Kation bedeutet.

Ebenfalls bevorzugt sind die Metallkomplexfarbstoffe der Formel V

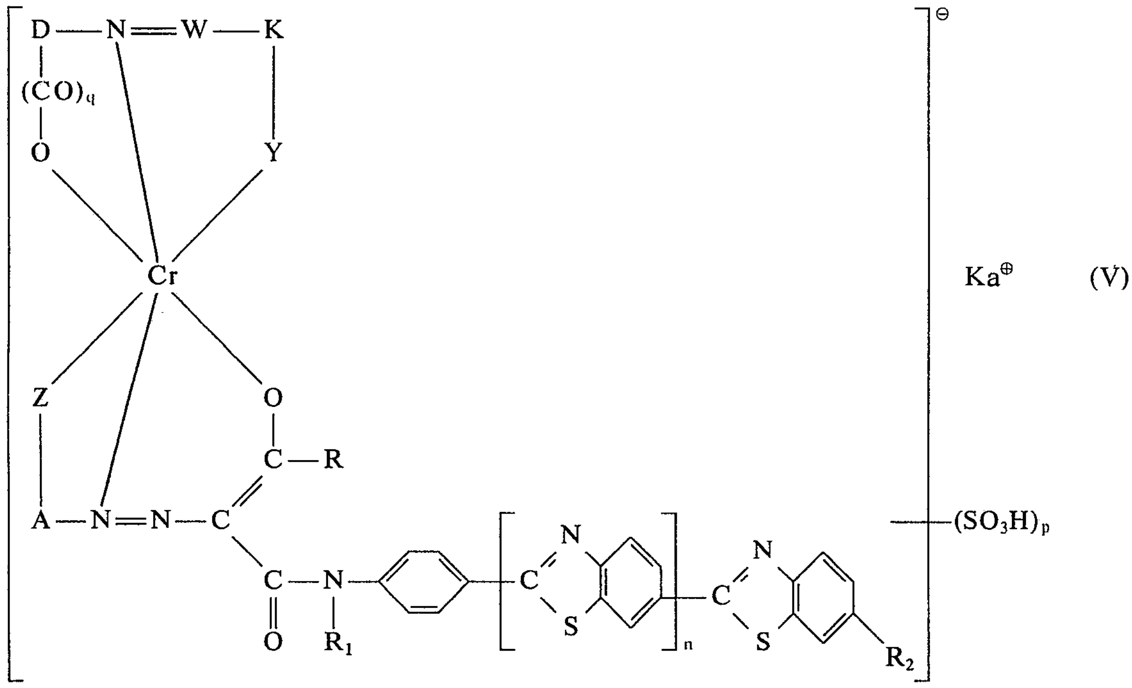

worin die Symbole A, R, $R_1$, $R_2$ und n die unter Formel I angegebenen Bedeutungen haben und

- Z Sauerstoff,
- p eine ganze Zahl zwischen 0 und 6,
- q 0 oder 1,
- D den Rest einer Diazokomponente der Benzol- oder Naphthalinreihe, welcher die komplexbildende Hydroxy- oder Carboxygruppe in o-Stellung zur Azogruppe trägt,
- W ein Stickstoffatom oder eine CH-Gruppe,
- Y ein Sauerstoffatom oder eine NH-Gruppe, wobei Y Sauerstoff sein muß, wenn W eine CH-Gruppe ist,
- K den Rest einer in o-Stellung zur Hydroxy- bzw. NH-Gruppe kuppelnden Kupplungskomponente, falls W ein Stickstoffatom bedeutet, oder, falls W die CH-Gruppe ist, den Rest eines o-Hydroxyaldehyds, und
- $Ka^{\oplus}$ ein Kation bedeutet.

Geeignete Gruppen A, R, $R_1$ und $R_2$ für die Metallkomplexfarbstoffe der Formeln IV und V sind die bei den Azofarbstoffen der Formel (I) aufgeführten Gruppen und unter diesen sind die dort als bevorzugt genannten auch bei den Metallkomplexfarbstoffen der Formeln IV und V besonders geeignet.

Der Rest D leitet sich beispielsweise von den gleichen Aminen ab, die oben für den Rest A aufgeführt sind. Vorzugsweise stellt D den Rest eines 1-Hydroxy-2-aminobenzols oder 1-Amino-2-hydroxynaphthalins dar, welches noch durch Nitro und/oder Chlor und/oder Sulfo substituiert ist.

Der Rest K leitet sich vor allem von folgenden Gruppen von Kupplungskomponenten ab: Phenole, Phenylendiamine, Naphthole, Naphthylamine, Pyrazolone, Pyrazolimine, Pyridone, Hydroxychinoline, Acetessigsäureamide, insbesondere -anilide.

Diese können noch einen oder mehrere weitere Substituenten tragen, z. B. die oben für den Rest A genannten Substituenten.

Bevorzugte Kupplungskomponenten K sind die folgenden: gegebenenfalls durch niedermolekulares Alkyl oder Alkoxy, Amino oder Acylamino substituierte Phenole, wobei Acylamino die oben angegebene Bedeutung besitzt, Resorcin, m-Phenylendiamin, gegebenenfalls in 4-Stellung substituiert durch Sulfo, Chlor, Methyl oder Methoxy, Naphthole, die gegebenenfalls mit niedermolekularem Alkyl oder Alkoxy, Chlor, Acylamino oder Sulfo substituiert sind, wobei Acylamino dieselbe Bedeutung hat, die vorne angegeben ist, 5-Pyrazolone oder 5-Aminopyrazole, die in 1-Stellung einen gegebenenfalls mit Chlor, Nitro, niedrigmolekularen Alkyl- oder Alkoxygruppen oder Sulfogruppen substituierten Phenyl- oder Naphthylrest besitzen und in 3-Stellung eine $C_1$—$C_4$-Alkyl- oder Carboxygruppe, insbesondere eine Methylgruppe, aufweisen, Naphthylamine, die gegebenenfalls mit Sulfo-, Sulfonamido- oder Sulfongruppen substituiert sind, Acetessigsäureanilide und Benzoylessigsäureanilide, die im Anilidkern gegebenenfalls mit Chlor, Brom, Nitro, niedrigmolekularen Alkyl-, Alkoxy- oder Sulfogruppen substituiert sein können, 6-Hydroxy-3-cyano- oder 6-Hydroxy-3-carbonamido-4-alkyl-2-pyridone, die in 1-Stellung durch niedrigmolekulares, gegebenenfalls substituiertes Alkyl, z. B. Methyl, Isopropyl, β-Hydroxyethyl, β-Aminoethyl oder γ-Isopropoxypropyl oder durch Phenyl substituiert sind und in

4-Stellung eine niedrigmolekulare Alkylgruppe, insbesondere Methyl, tragen können, oder Hydroxychinoline.

Beispiele solcher Kupplungskomponenten sind: 2-Naphthol, 1,3- oder 1,5-Dihydroxynaphthalin, 1-Naphthol, 1-Acetylamino-7-naphthol, 1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6-sulfosäure, 2-Aminonaphthalin-5-sulfosäure, 6-Methylsulfonyl-2-aminonaphthalin, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-(2',3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methylpyrazol-5-on, 1-(2',3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoacet-o-chloranilid, Acetoacet-m-xylidid, Tetralol, 4-Methylphenol, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonyl-amino-4-methylphenol, 2-Ethoxycarbonylamino-4-methylphenol und 3,4-Dimethylphenol, Resorcin, 1-Methyl-3-cyano-4-ethyl-6-hydroxypyridon, 1-Methyl-3-cyano-4-methyl-6-hydroxypyridon, 1-Phenyl-3-carbonamido-4-methyl-6-hydroxypyridon, 2,4-Dihydroxychinolin, 1-Ethyl-4-hydroxy-2-chinolon.

Vorzugsweise stellt die Kupplungskomponente K ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$—$C_6$)-phenol, 1-Phenyl-3-methyl-5-pyrazolon oder Acetessigsäureanilid dar, wobei die Phenylgruppe in den beiden letztgenannten Verbindungen durch $C_1$—$C_4$-Alkyl, $C_1$—$C_4$-Alkoxy, Chlor oder Sulfo substituiert sein kann.

Unter den Metallkomplexfarbstoffen der Formel V sind diejenigen besonders geeignet, bei denen A der Rest eines 1-Hydroxy-2-aminobenzols ist, welches durch Chlor, Nitro und/oder Sulfo substituiert ist, R Methyl, $R_1$ Wasserstoff, $R_2$ Methyl, Z Sauerstoff und n 1 bedeutet und D, W, K, Y, q, p und $Ka^+$ die unter der Formel V angegebene Bedeutung besitzen.

Ebenfalls bevorzugt sind die Farbstoffe der Formel V, worin D den Rest eines 1-Hydroxy-2-aminobenzols oder 1-Amino-2-hydroxynaphthalins darstellt, welches noch durch Nitro, Chlor und/oder Sulfo substituiert ist und K ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$—$C_6$)-phenol, 1-Phenyl-3-methyl-5-pyrazolon oder Acetessigsäureanilid darstellt, wobei die Phenylgruppe in den beiden letztgenannten Verbindungen durch $C_1$—$C_4$-Alkyl, $C_1$—$C_4$-Alkoxy, Chlor oder Sulfo substituiert sein kann.

Sofern W eine CH-Gruppe ist, stellt K den Rest eines o-Hydroxyaldehyds, vorzugsweise den Rest eines gegebenenfalls substituierten o-Hydroxybenzaldehyds oder o-Hydroxynaphthaldehyds, dar. Geeignete Aldehyde sind beispielsweise: 2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, sowie die davon ableitbaren, mit Arylazo substituierten Aldehyde.

Die Reste D und/oder K können weitere Arylazogruppen tragen, so daß D—N=W—K auch Disazofarbstoffe bzw. Azomethin-azofarbstoffe, darstellen kann. Als Farbstoffe der Formel D—N=N—K kommen vor allem die bekannten metallisierbaren Farbstoffe in Frage, beispielsweise die im »Colour Index« als mordant dyes aufgeführten.

Die metallfreien Azofarbstoffe der Formel I werden nach an sich bekannten Methoden erhalten, z. B. indem man eine Verbindung der Formel VI

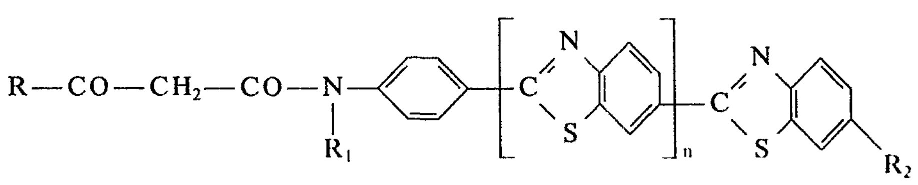

(VI)

mit einer Diazoniumverbindung eines Amins der Formel A—$NH_2$ kuppelt, wobei die beiden Verbindungen insgesamt 0 bis 3 Sulfogruppen enthalten. R, $R_1$, $R_2$, n und A weisen dabei die oben angegebenen Bedeutungen auf.

Die Verbindungen der Formel VI sind bekannt und können z. B. hergestellt werden durch Umsetzung

von Diketen mit Dehydrothiotoluidin.

Die Metallkomplexfarbstoffe, enthaltend mindestens einen Azofarbstoff der Formel I, werden z. B. hergestellt, indem man einen Azofarbstoff der Formel I oder ein Gemisch aus einem Azofarbstoff der Formel I und einem zweiten Azofarbstoff der Formel I und/oder einem anderen Azo- oder Azomethinfarbstoff mit einem metallabgebenden, insbesondere einem kobalt- oder chromabgebenden Mittel, umsetzt. Die Metallisierung wird nach den üblichen Verfahren durchgeführt, z. B. mit Kupfersulfat, Eisenchlorid, Kobaltsulfat oder -acetat oder Chromsalicylat in schwach alkalischer, neutraler oder schwach saurer Lösung.

Chromierungen können außerdem mit Chromaten in Gegenwart eines Reduktionsmittels durchgeführt werden. Die Azofarbstoffe werden mit den Metallisierungsmitteln im Verhältnis 1 : 1 oder 1 : 2 umgesetzt, wobei man unter den für diese Metallisierungen üblichen Bedingungen arbeitet. Die Metallisierung kann in wäßrigen, organisch-wäßrigen oder in rein organischen Lösungsmitteln, wie Alkoholen oder Ketonen, durchgeführt werden, gegebenenfalls unter Zusatz von lösungsvermittelnden oder die Metallisierung beschleunigenden Substanzen, wie z. B. Komplexbildnern.

Man kann auch ein Gemisch von Azofarbstoffen mit den Metallisierungsmitteln umsetzen und so direkt Mischungen von verschiedenen Metallkomplexfarbstoffen herstellen. Bei den 1 : 2-Metallkomplexen entstehen in diesem Falle neben den 1 : 2-Komplexen, enthaltend zwei identische Azofarbstoffe, auch sog. unsymmetrische 1 : 2-Komplexe, enthaltend zwei verschiedene Azofarbstoffe.

Im Fall der Chromkomplexe kann man auch den Azofarbstoff der Formel I mit einem 1 : 1-Chromkomplexfarbstoff zum 1 : 2-Chromkomplexfarbstoff umsetzen und so zu einheitlichen unsymmetrischen 1 : 2-Komplexen gelangen.

Schließlich ist es auch möglich, einen Azofarbstoff der Formel I, gegebenenfalls im Gemisch mit einem zweiten Azofarbstoff der Formel I und/oder anderen Azo- oder Azomethinfarbstoffen gleichzeitig mit zwei verschiedenen Metallisierungsmitteln umzusetzen, so daß man direkt Gemische von Komplexfarbstoffen verschiedener Metalle erhält.

Die metallfreien Azofarbstoffe der Formel (I) eignen sich zum Färben oder Bedrucken von Wolle und Baumwolle, indem man die Färbung auf der Faser mittels metallabgebenden Mitteln, vorzugsweise kupfer-, chrom- oder kobaltabgebenden Mitteln, nachbehandelt.

Die nach den obigen Verfahren erhältlichen, neuen Metallkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen Stickstoff- und Hydroxygruppen enthaltenden Materialien wie Polyamiden, Wolle, Baumwolle, Papier oder Polyurethanen, insbesondere aber zum Färben von Leder.

Die Metallkomplexfarbstoffe der Formel III, welche keine oder nur 1 oder 2 Sulfogruppen besitzen, werden bevorzugt als Aminsalze isoliert. Sie eignen sich z. B. zum Aufsprühen auf Leder sowie zum Färben von organischen Flüssigkeiten, Lacken und Polymeren.

Die neuen Farbstoffe sind farbstark und decken gut. Sie haben ein gutes Ziehvermögen bei gleichzeitig guten Echtheiten, wie Wasch-, Wasser-, Schweiß-, Reib-, Diffusions-, Licht-, Säure- und Alkaliechtheit, sowie Säure- und Alkalistabilität. Besondere Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige gelbe, orange-rote bis braune oder olive Nuancen.

Der nächstliegende Farbstoff ist der Farbstoff aus Beispiel 6 der FR-A-1 054 885.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

Beispiel 1

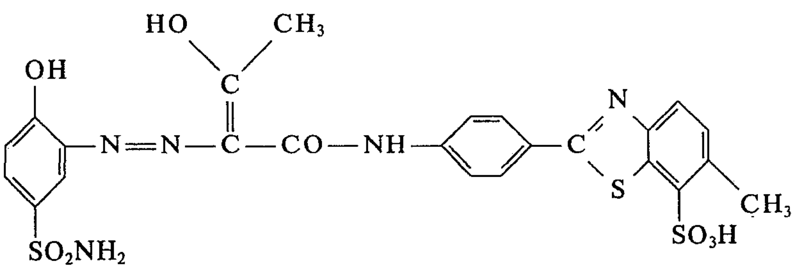

18,8 Teile 4-Sulfonamido-2-amino-1-hydroxybenzol werden in 400 Teilen Wasser und 100 Teilen Eis mit 25,0 Teilen 31%iger Salzsäure versetzt und durch Zugabe von 25,0 Teilen 4 N Natriumnitritlösung bei 0°–5° diazotiert und nach üblicher Weise auf 40,4 Teile 6-Methyl-2-(p-N-acetoacetylaminophenyl)-benzthiazol-7-sulfonsäure (N-Acetoacetyldehydrothio-p-toluidin-7-sulfonsäure) in 400 Teilen Wasser mit Hilfe von Natronlauge bei pH 7–8 und Raumtemperatur gekuppelt. Der erhaltene Farbstoff wird mit 75 Teilen Kochsalz ausgesalzen, filtriert und getrocknet.

Der nach üblicher Weise auf Baumwolle ausgefärbte und mit Kupfersulfat auf der Faser zum 1 : 1-Komplex umgesetzte Farbstoff ergibt eine gelbe Färbung mit guten Echtheiten.

## Beispiel 2

Der nach Beispiel 1 erhaltene, nicht metallisierte Farbstoff wird mit 500 Teilen Wasser versetzt und bei 60° mit 16 Teilen Kupfersulfat metallisiert, wobei der pH mit Hilfe von Natronlauge bei pH 6 gehalten wird. Der erhaltene 1 : 1-Kupferkomplex wird mit 50 Teilen Kochsalz ausgefällt, filtriert und getrocknet.

Eine Ausfärbung auf Baumwolle entspricht weitgehend Beispiel 1.

Wird an Stelle von Kupfersulfat die äquivalente Menge Nickelacetat verwendet, so erhält man den entsprechenden 1 : 1-Nickelkomplex, der in Nuance und Eigenschaften dem Kupferkomplex ähnlich ist.

Diese Farbstoffe eignen sich auch zum Färben von Papier.

Den analogen 1 : 1-Chromkomplex erhält man mit der äquivalenten Menge Chromtrichlorid im stark sauren Medium. Mit diesem Farbstoff läßt sich Wolle in einem gelben Farbton färben.

Alle diese Farbstoffe eignen sich außerdem zum Färben von Polyamid und Leder.

## Beispiele 3–7

Farbstoffe mit ähnlichen Eigenschaften erhält man, wenn man die in Spalte 2 der folgenden Tabelle genannten Azofarbstoffe wie oben beschrieben zum Kupferkomplex umsetzt. Die erhaltenen Farbstoffe färben Baumwolle in der in Spalte 3 bezeichneten Nuance.

| Nr. | Azofarbstoff | Farbe auf Baumwolle |
|---|---|---|
| 3 | 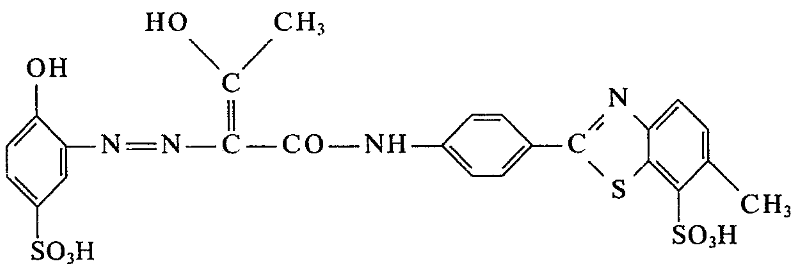 | gelb |
| 4 | 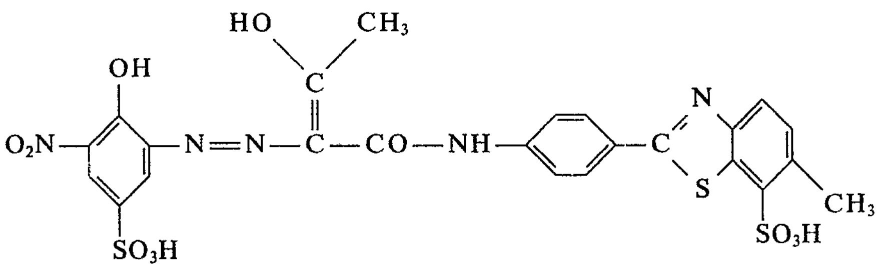 | orange |
| 5 | 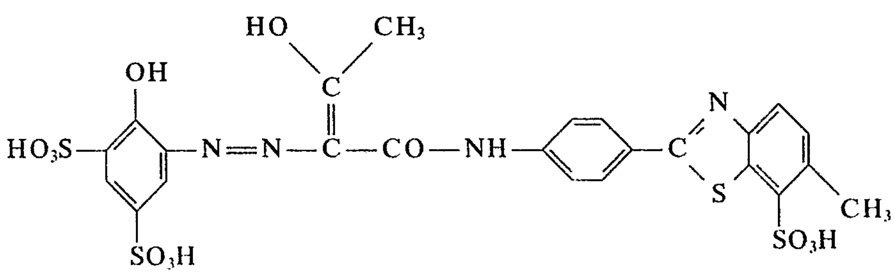 | gelb |

Fortsetzung

| Nr. | Azofarbstoff | Farbe auf Baumwolle |
|---|---|---|
| 6 | 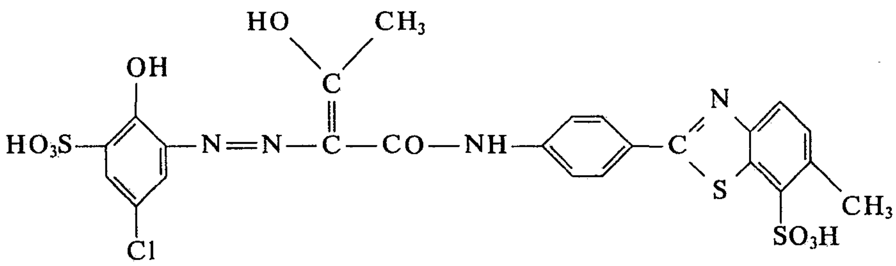 | gelb |
| 7 | 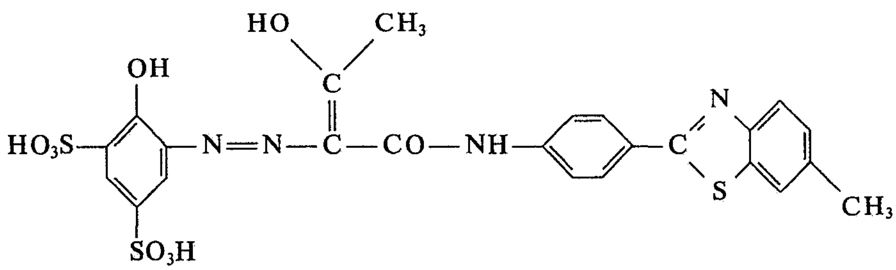 | gelb |

Beispiel 8

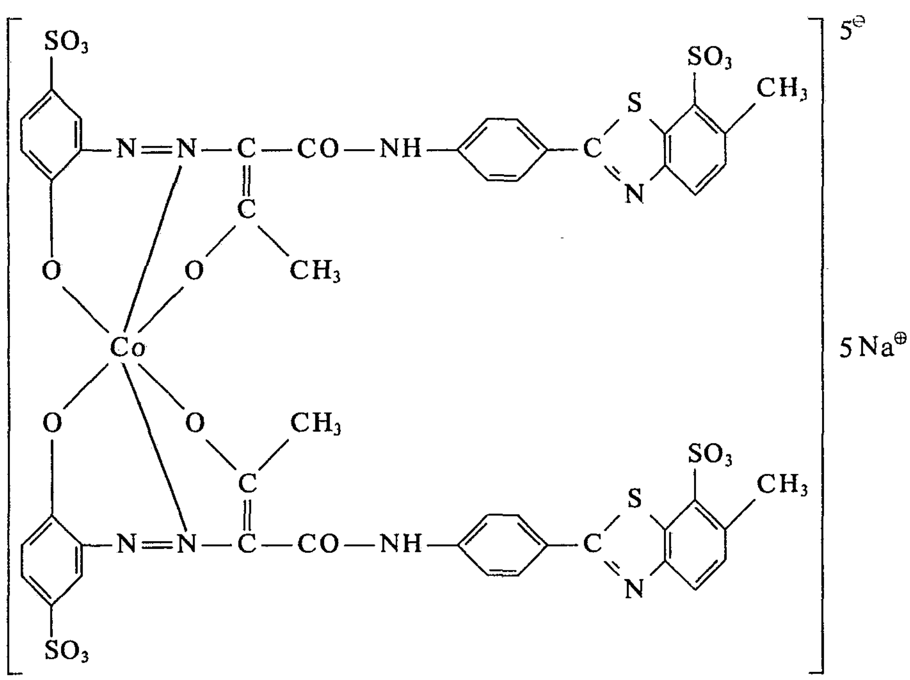

60,4 Teile des Monoazofarbstoffes, der erhalten wird aus diazotierter 2-Aminophenol-4-sulfonsäure und 6-Methyl-2-(p-N-acetoacetylaminophenyl)-benzthiazol-7-sulfonsäure (N-Acetoacetyldehydro-thio-p-toluidin-7-sulfonsäure) werden in 500 Teile Wasser eingetragen und mit 60 Teilen einer 1 molaren Kobaltsulfatlösung versetzt. Man erhitzt das Reaktionsgemisch auf 80° und hält es durch Zutropfen von 2molarer Natronlauge bei einem pH-Wert von 6 bis 9. Nach Beendigung der Metallisierung wird der kobalthaltige Farbstoff durch Zugabe von Natriumchlorid ausgefällt. Der erhaltene Farbstoff färbt Leder in einem mittleren bis dunklerem Gelbton mit guten Echtheiten.

Beispiele 9 bis 23

Farbstoffe mit ähnlichen Eigenschaften erhält man, wenn man den Azofarbstoff, erhalten aus der in Spalte 2 der folgenden Tabelle genannten Diazokomponente und der in Spalte 3 aufgeführten Kupplungskomponente, wie oben beschrieben zum 1:2-Metallkomplex des in Spalte 4 angegebenen Metalls umwandelt. Die Farbstoffe färben Leder in der in Spalte 5 verzeichneten Nuance.

| Nr. | Diazokomponente | Kupplungskomponente | Metall | Farbe auf Leder |
|---|---|---|---|---|
| 9 | 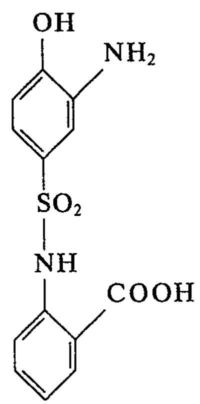 | 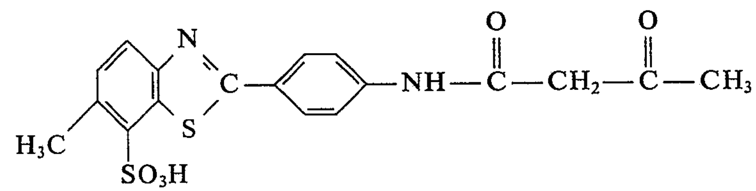 | Cr | rotgelb |
| 10 | desgl. | desgl. | Co | gelb |
| 11 | 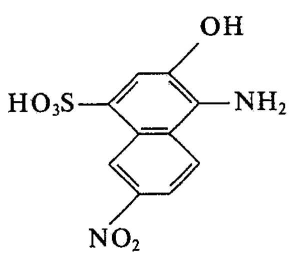 | desgl. | Cr | rot |
| 12 | desgl. | desgl. | Co | braun |
| 13 | 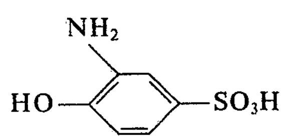 | desgl. | Cr | gelb |

Fortsetzung

| Nr. | Diazokomponente | Kupplungskomponente | Metall | Farbe auf Leder |
|---|---|---|---|---|
| 14 | 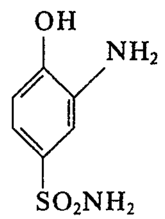 | 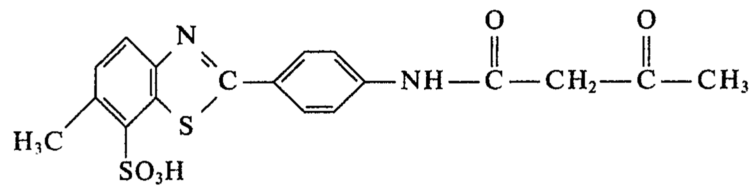 | Co | gelb |
| 15 | desgl. | desgl. | Cr | rotgelb |
| 16 | 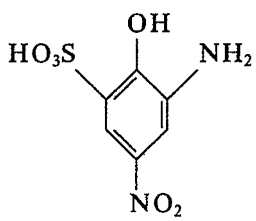 | desgl. | Co | gelb |
| 17 | 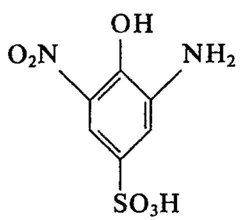 | desgl. | Co | orange |
| 18 | 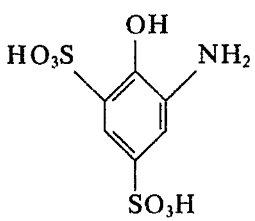 | desgl. | Co | gelb |

Fortsetzung

| Nr. | Diazokomponente | Kupplungskomponente | Metall | Farbe auf Leder |
|---|---|---|---|---|
| 19 | 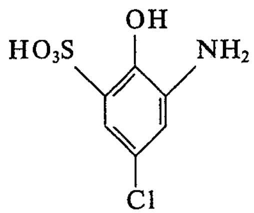 | 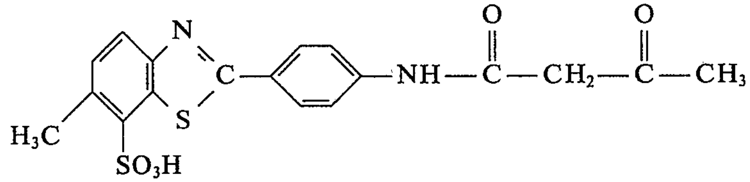 | Co | gelb |
| 20 | desgl. | desgl. | Fe | mittel-braun |
| 21 | 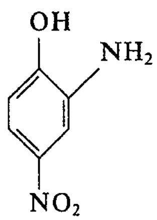 | desgl. | Co | gelb |
| 22 | desgl. | 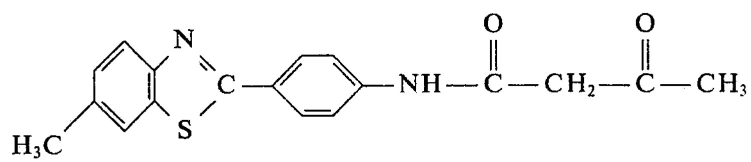 | Co | gelb |
| 23 | 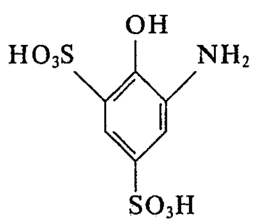 | desgl. | Co | gelb |

Beispiel 24

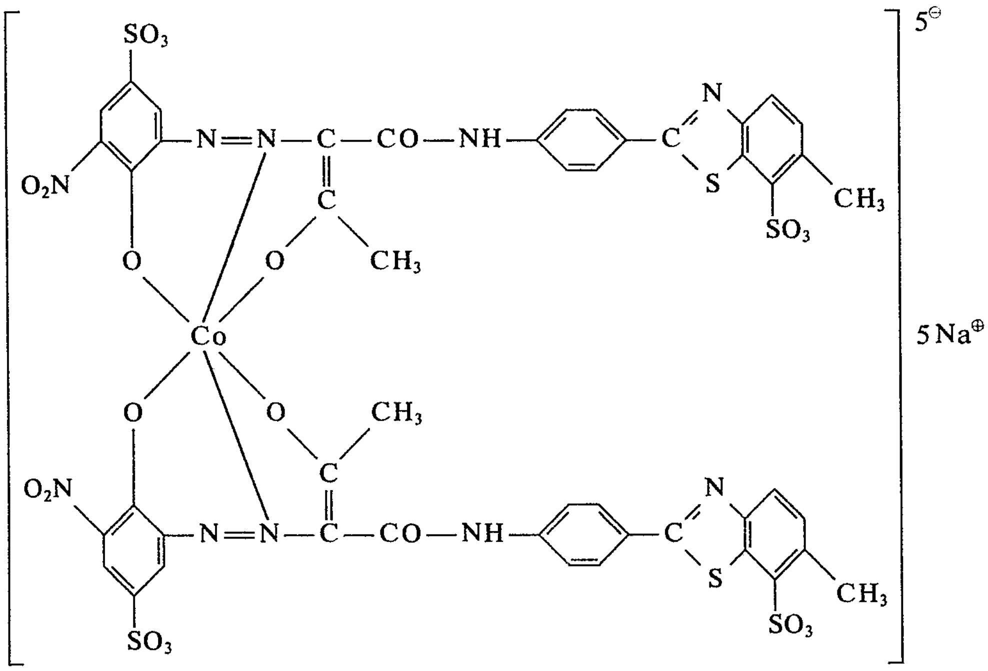

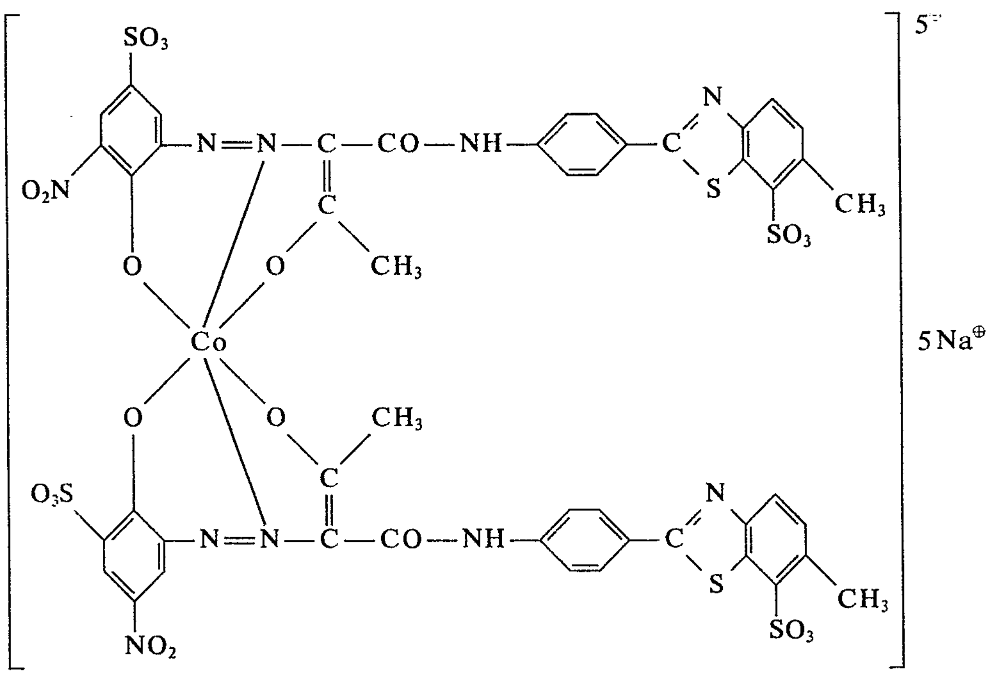

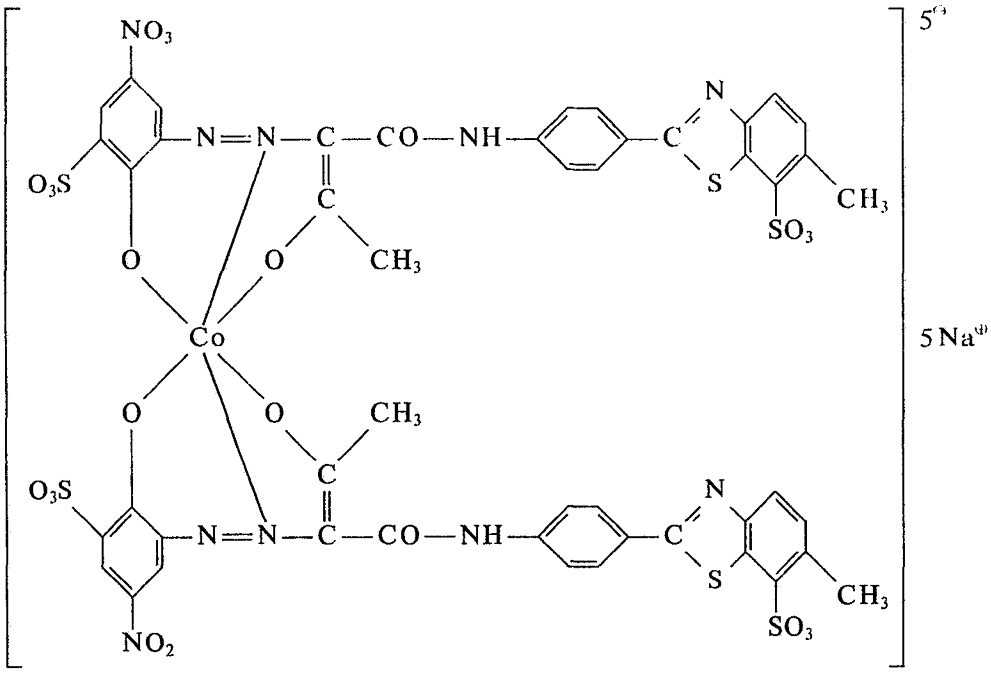

32,4 Teile des Monoazofarbstoffes, der erhalten wird aus diazotierter 2-Amino-4-nitro-phenol-6-sulfonsäure und N-Acetoacetyldehydrothio-p-toluidin-7-sulfonsäure, sowie 32,4 Teile des Monoazofarbstoffes, der analog aus diazotierter 2-Amino-6-nitro-phenol-4-sulfonsäure und N-Acetoacetyldehydrothio-p-toluidin-7-sulfonsäure hergestellt wird, werden in 500 Volumenteilen Wasser eingetragen und mit 60 Volumenteilen einer 1molaren Kobaltsulfatlösung bei 80° und einem pH von 6 bis 9 metallisiert. Nachdem man mit Natriumchlorid das Farbstoffgemisch der angegebenen Formeln ausgefällt, filtriert und getrocknet hat, erhält man ein gelbbraunes Pulver, welches Leder in einem gelbbraunen Farbton mit guten Echtheiten färbt.

Beispiel 25

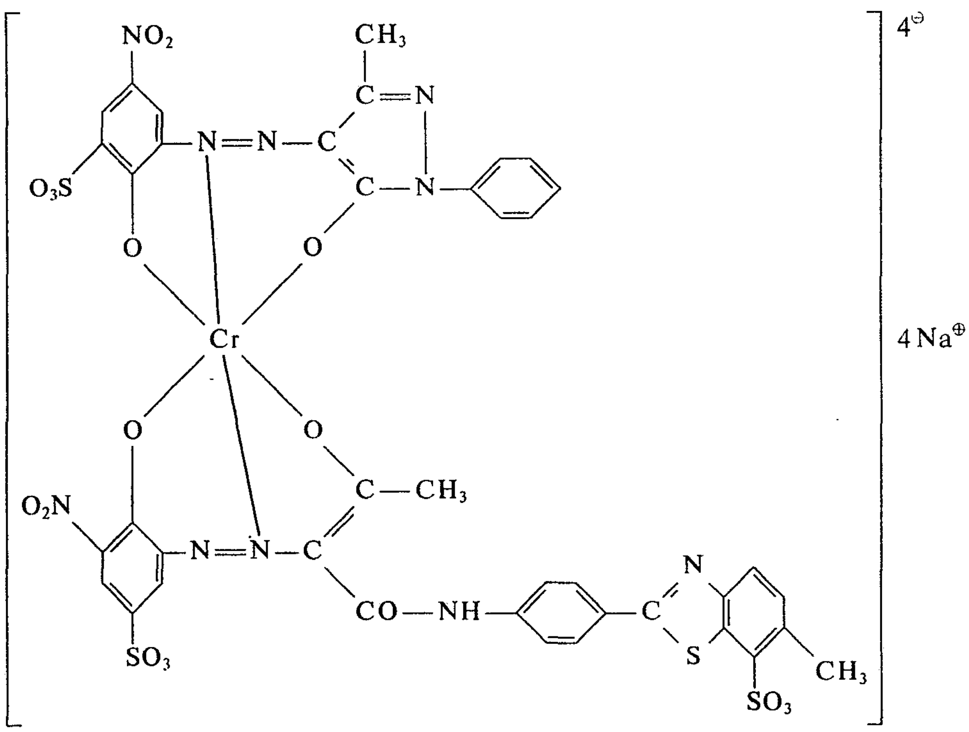

In 500 Teilen Wasser wird die komplexe 1 : 1-Chromverbindung, welche 21 Teile Farbstoff aus diazotierten 2-Amino-4-nitrophenol-6-sulfonsäure und 1-Phenyl-3-methylpyrazol-5-on sowie 2,6 Teile

Chrom enthält, vorgelegt und mit 32,4 Teilen des Monoazofarbstoffes aus diazotierter 2-Amino-6-nitrophenol-4-sulfonsäure und N-Acetoacetyl-dehydrothio-p-toluidin-7-sulfonsäure versetzt. Die Reaktionsmischung wird mit Natronlauge unter kräftigem Rühren bei einem pH-Wert von 6 bis 8 gehalten, bis die Bildung des 1 : 2-Metallkomplexes beendet ist. Dabei wird die Temperatur auf 70 bis 90° erhöht. Der Farbstoff wird anschließend mit Kochsalz ausgefällt, abfiltriert und getrocknet. Er färbt Leder in einem orangen Farbton mit guten Echtheiten.

Beispiele 26 bis 34

Farbstoffe mit ähnlichen Eigenschaften erhält man, wenn man den 1 : 1-Chromkomplex des in Spalte 3 der folgenden Tabelle genannten Azo- oder Azomethinfarbstoffes mit dem in Spalte 2 aufgeführten Azofarbstoff wie oben beschrieben zum 1 : 2-Chromkomplex umsetzt. Die erhaltenen Farbstoffe färben Leder in der in Spalte 4 verzeichneten Nuance.

| Nr. | Azofarbstoff aus N-Acetoacetyl-dehydrothio-p-toluidin-7-sulfonsäurederivat | Azo- bzw. Azomethinfarbstoff | Farbe auf Leder |
|---|---|---|---|
| 26 | 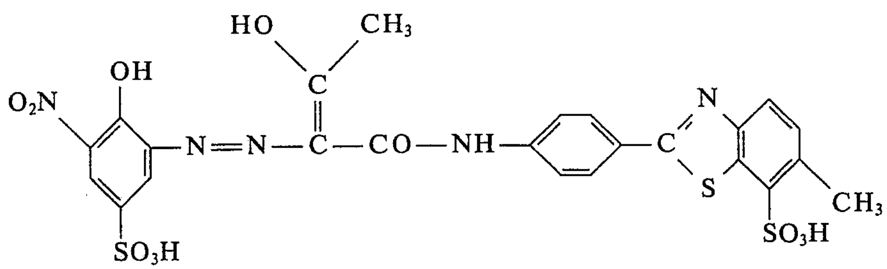 | 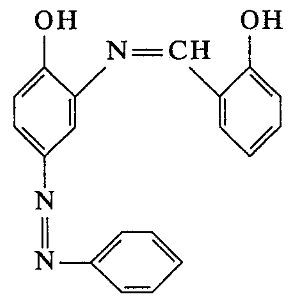 | orange-braun |
| 27 | desgl. | 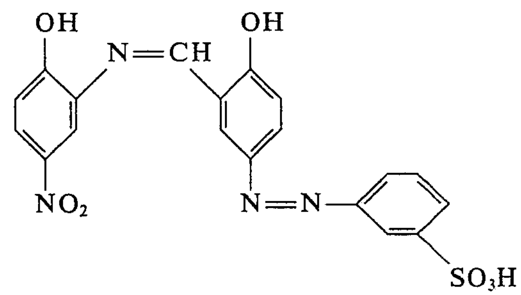 | orange-braun |
| 28 | desgl. | 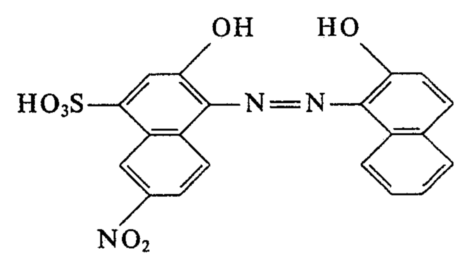 | braun |

Fortsetzung

| Nr. | Azofarbstoff aus N-Acetoacetyl-dehydrothio-p-toluidin-7-sulfonsäurederivat | Azo- bzw. Azomethinfarbstoff | Farbe auf Leder |
|---|---|---|---|
| 29 | 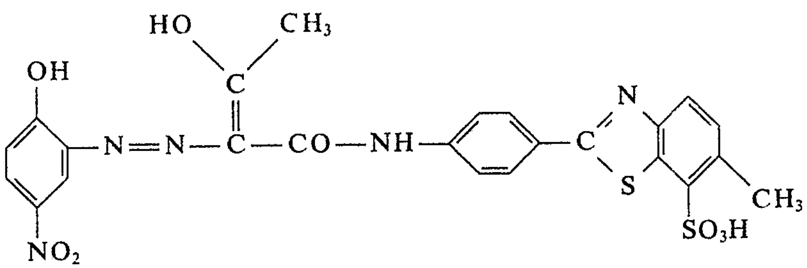 | 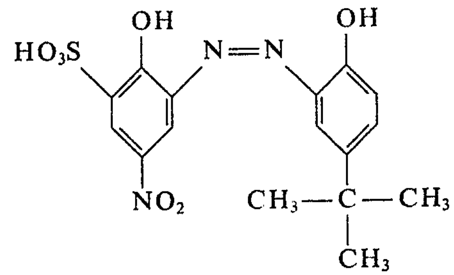 | braun |
| 30 | 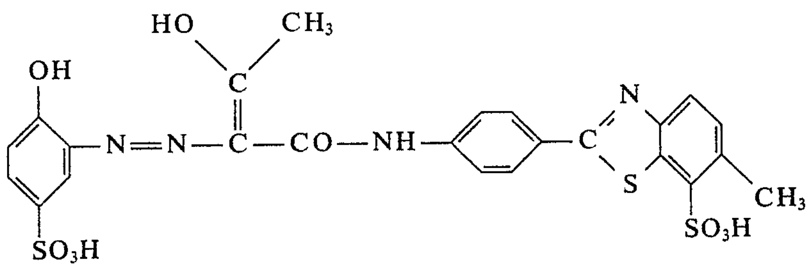 | 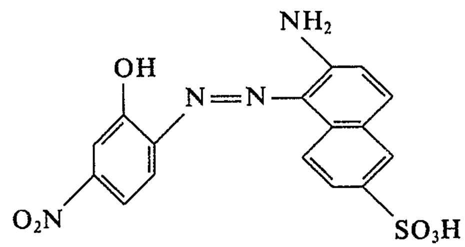 | olive-grün |
| 31 | desgl. | 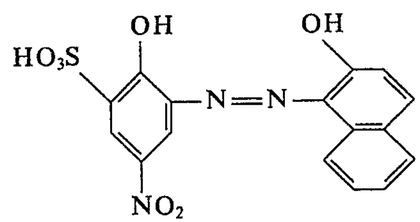 | braun |
| 32 | 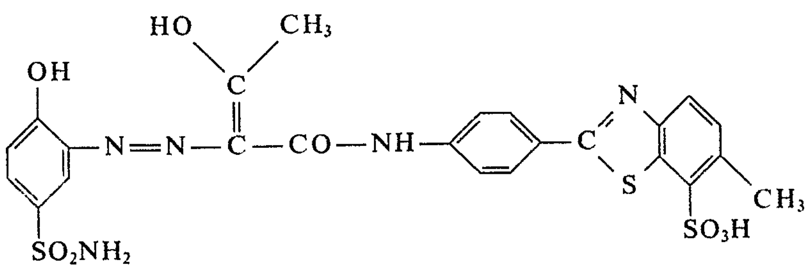 | 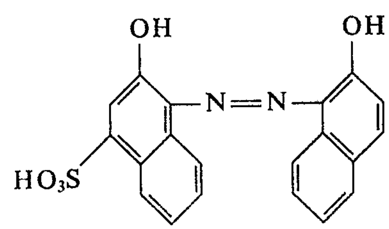 | dunkel-braun |

Fortsetzung

| Nr. | Azofarbstoff aus N-Acetoacetyl-dehydrothio-p-toluidin-7-sulfonsäurederivat | Azo- bzw. Azomethinfarbstoff | Farbe auf Leder |
|---|---|---|---|
| 33 | 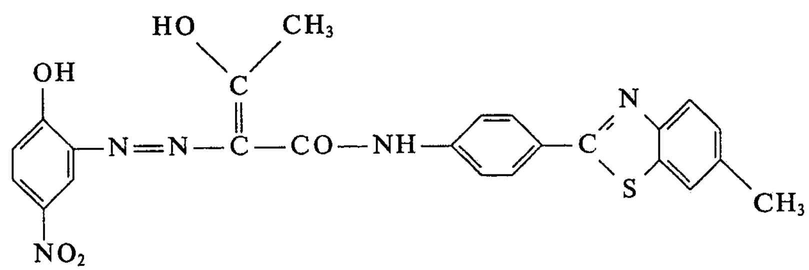 | 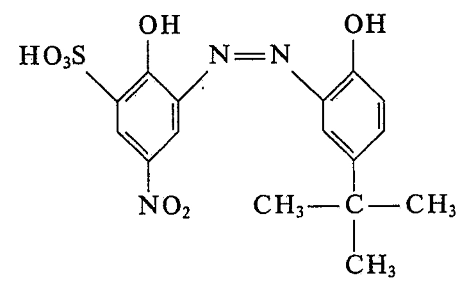 | braun |
| 34 | 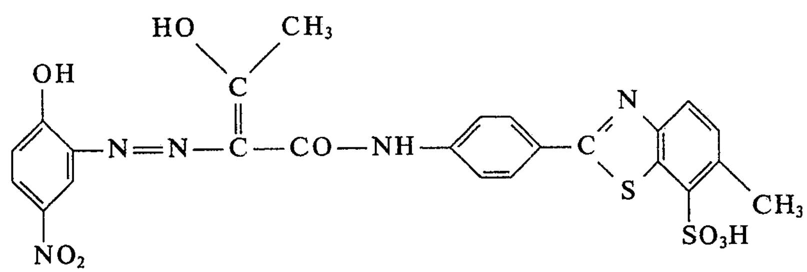 | 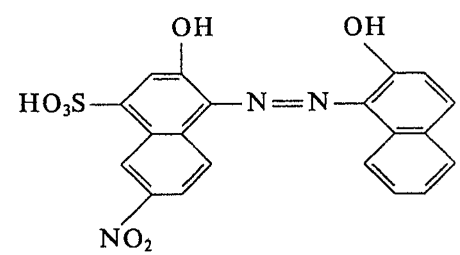 | dunkel-braun |

Färbevorschrift für Leder

100 Teile neutralisiertes chromgegerbtes Rindsleder werden mit 1,0 Teilen Farbstoff des Beispiels 28 in 500 Teilen Wasser bei 50°C gefärbt. Nach 30 Minuten werden der Farbstoffflotte 3 Teile eines synthetischen Fettungsmittels (Gemisch aus Alkylbenzolen, aliphatischen Kohlenwasserstoffen, Alkansulfonsäuren und Tensiden) und nach weiteren 30 Minuten 0,5 Teile Ameisensäure 85%ig, verdünnt mit 5 Teilen Wasser zugesetzt. Nach 20 Minuten wird mit Wasser gespült und die Färbung in üblicher Weise fertiggestellt. Man erhält eine braune Färbung mit guten Echtheiten.

Aufsprühvorschrift für Leder

3 Teile Farbstoff des Tabellenbeispiels 13 werden in einer Lösungsmittelmischung, bestehend aus 80 Teilen Dimethylformamid und 17 Teilen Diethylenglykol gelöst. Diese Farblösung wird nun mit einer Spritzpistole auf Leder aufgesprüht und das Leder anschließend getrocknet. Man erhält eine gelbe Färbung mit guten Echtheiten.

Färbevorschrift für Papier

10,0 Teile feuchte, gebleichte Cellulose werden in 500 Teilen Wasser suspendiert und mit 0,1 Teilen Farbstoff des Beispiels 3 bei Raumtemperatur gefärbt, abfiltriert und nach üblicher Weise fertiggestellt. Man erhält gelb gefärbtes Papier mit guter Lichtechtheit.

Färbevorschrift für Polyamid

100 Teile Polyamidstrickgarn werden bei 50° in ein Färbebad eingeführt, das auf 4000 Teile Wasser 2 Teile des Farbstoffes des Beispiels 32, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein khaki gefärbtes Polyamid mit guten Echtheitseigenschaften.

**Patentansprüche**

1. Metallisierbare Azofarbstoffe der Formel I

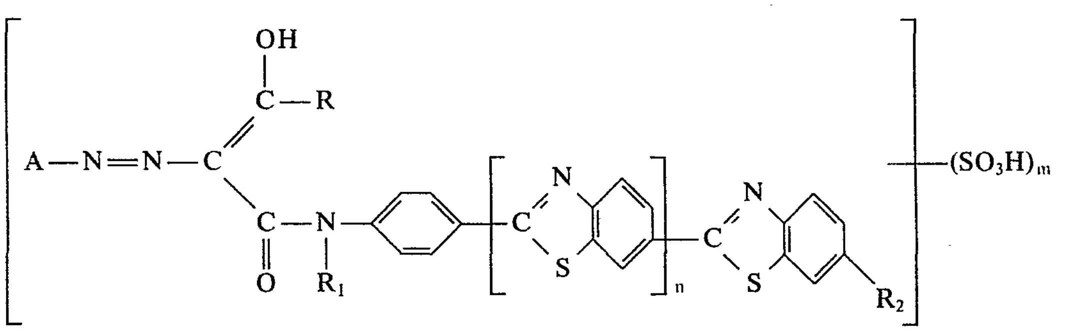

(I)

worin

A den Rest einer Diazokomponente der Benzol- oder Naphthalinreihe bedeutet, die in o-Stellung zur Azogruppe eine metallisierbare Hydroxygruppe trägt, und unsubstituiert ist, oder einen oder mehrere der folgenden Substituenten trägt: niedermolekulares Alkyl oder Alkoxy, Chlor, Brom, Nitro, Cyano, Sulfo, Alkylsulfonyl, Sulfamide, niedrigmolekulare Alkanoylamino-, Alkylsulfonylamino- und Alkoxycarbonylamino-, Sulfonylamino-, Aroylamino- und Arylsulfonylaminoreste oder die Azobenzol- oder Azonaphthalingruppe, wobei deren Arylgruppen wiederum wie oben beschrieben substituiert sein können,

R Methyl, Chlormethyl oder Phenyl, das durch $C_1$—$C_4$-Alkyl, $C_1$—$C_4$-Alkoxy oder Halogen substituiert sein kann,

$R_1$ Wasserstoff oder $C_1$—$C_4$-Alkyl,

$R_2$ Wasserstoff oder Methyl,

n 0 oder 1 und

m 0, 1, 2 oder 3 bedeutet.

2. Farbstoffe gemäß Anspruch 1, worin A der Rest eines 1-Hydroxy-2-aminobenzols ist, der durch

Chlor, Nitro und/oder Sulfo substituiert ist, insbesondere der Rest eines 1-Hydroxy-2-amino-nitrobenzols, welcher gegebenenfalls eine Sulfogruppe trägt.

3. Farbstoffe gemäß Ansprüchen 1 und 2, worin R Methyl bedeutet.
4. Farbstoffe gemäß Ansprüchen 1 bis 3, worin $R_1$ Wasserstoff bedeutet.
5. Farbstoffe gemäß Ansprüchen 1 bis 4, worin $R_2$ Methyl bedeutet.
6. Farbstoffe gemäß Ansprüchen 1 bis 5, worin n 0 bedeutet.
7. Farbstoffe gemäß Ansprüchen 1 bis 6 der Formel II

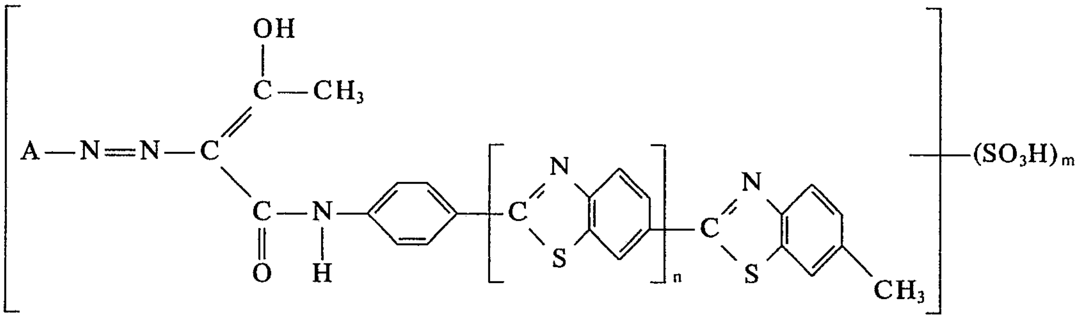

(II)

worin

A der Rest eines 1-Hydroxy-2-aminobenzols ist, welcher durch Chlor, Nitro und/oder Sulfo substituiert ist,
n 0 oder 1 und
m 1 oder 2 bedeutet.

8. Metallkomplexfarbstoffe, enthaltend mindestens einen Farbstoff der angegebenen Formel I, worin das Metall ein Schwermetall ist.

9. Metallkomplexfarbstoffe gemäß Anspruch 8, worin das Metall, Kupfer oder Eisen, vorzugsweise Kobalt oder Chrom ist.

10. Metallkomplexfarbstoffe der Formel III

$$F_1—Me—F_2 \qquad (III)$$

worin

$F_1$ ein metallisierbarer Azofarbstoff der oben angegebenen Formel I,
Me Kobalt oder Chrom und
$F_2$ ein metallisierbarer Azofarbstoff der oben angegebenen Formel I, welcher mit $F_1$ identisch oder von $F_1$ verschieden sein kann, oder ein beliebiger metallisierbarer Azo- oder Azomethinfarbstoff ist.

11. Farbstoffe gemäß Anspruch 10 der Formel IV

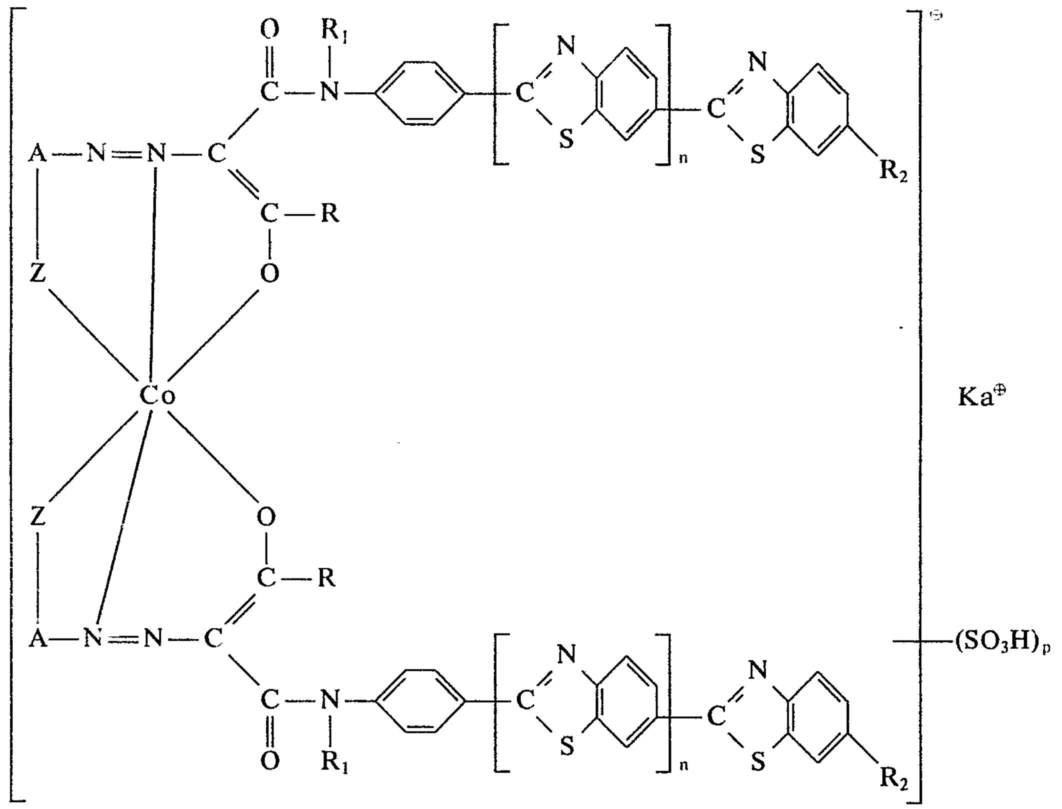

Ka$^{\oplus}$ (IV)

worin

A den Rest einer Diazokomponente der Benzol- oder Naphthalinreihe bedeutet, die in o-Stellung zur Azogruppe eine metallisierbare Hydroxygruppe trägt, und unsubstituiert ist, oder einen oder mehrere der folgenden Substituenten trägt: niedermolekulares Alkyl oder Alkoxy, Chlor, Brom, Nitro, Cyano, Sulfo, Alkylsulfonyl, Sulfamide, niedrigmolekulare Alkanoylamino-, Alkylsulfonylamino- und Alkoxycarbonylamino-, Sulfonylamino-, Aroylamino- und Arylsulfonylaminoreste oder die Azobenzol- oder Azonaphthalingruppe, wobei deren Arylgruppen wiederum wie oben beschrieben substituiert sein können,
R Methyl, Chlormethyl oder Phenyl, das durch $C_1$—$C_4$-Alkyl, $C_1$—$C_4$-Alkoxy oder Halogen substituiert sein kann,
$R_1$ Wasserstoff oder $C_1$—$C_4$-Alkyl,
$R_2$ Wasserstoff oder Methyl,
n 0 oder 1,
Z Sauerstoff,
p eine ganze Zahl zwischen 0 und 6 und
Ka$^{\oplus}$ ein Kation bedeutet.

12. Farbstoffe gemäß Anspruch 11 der Formel IV, worin

A der Rest eines 1-Hydroxy-2-aminobenzols ist, welcher durch Chlor, Nitro und/oder Sulfo substituiert ist,
R Methyl,
$R_1$ Wasserstoff,
$R_2$ Methyl,
Z Sauerstoff und
n 1 bedeutet,

und die übrigen Symbole die im Anspruch 11 angegebene Bedeutung aufweisen.

13. Farbstoffe gemäß Anspruch 8 der Formel V

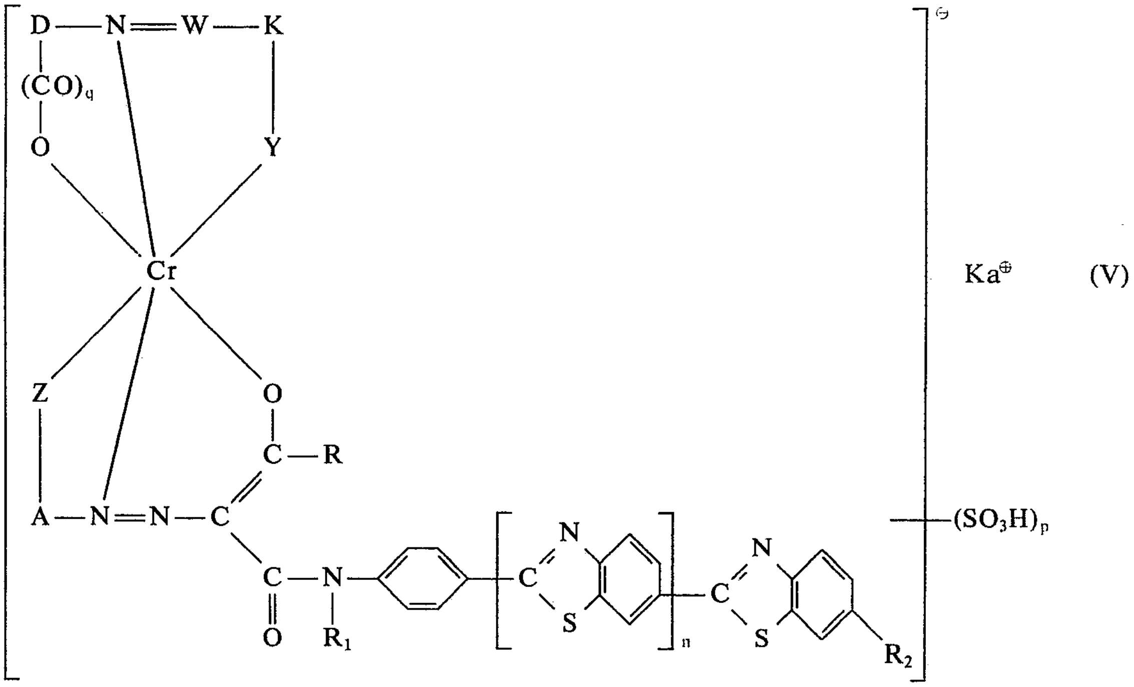

worin

A den Rest einer Diazokomponente der Benzol- oder Naphthalinreihe bedeutet, die in o-Stellung zur Azogruppe eine metallisierbare Hydroxygruppe trägt, und unsubstituiert ist, oder einen oder mehrere der folgenden Substituenten trägt: niedermolekulares Alkyl oder Alkoxy, Chlor, Brom, Nitro, Cyano, Sulfo, Alkylsulfonyl, Sulfamide, niedrigmolekulare Alkanoylamino-, Alkylsulfonylamino- und Alkoxycarbonylamino-, Sulfonylamino-, Aroylamino- und Arylsulfonylaminoreste oder die Azobenzol- oder Azonaphthalingruppe, wobei deren Arylgruppen wiederum wie oben beschrieben substituiert sein können,

R Methyl, Chlormethyl oder Phenyl, das durch $C_1$—$C_4$-Alkyl, $C_1$—$C_4$-Alkoxy oder Halogen substituiert sein kann,

$R_1$ Wasserstoff oder $C_1$—$C_4$-Alkyl,

$R_2$ Wasserstoff oder Methyl,

n 0 oder 1,

Z Sauerstoff,

p eine ganze Zahl zwischen 0 und 6,

q 0 oder 1,

D den Rest einer Diazokomponente der Benzol- oder Naphthalinreihe, welcher die komplexbildende Hydroxy- oder Carboxygruppe in o-Stellung zur Azogruppe trägt,

W ein Stickstoffatom oder eine CH-Gruppe,

Y ein Sauerstoffatom oder eine NH-Gruppe, wobei Y Sauerstoff sein muß, wenn W eine CH-Gruppe ist,

K den Rest einer in o-Stellung zur Hydroxy- bzw. NH-Gruppe kuppelnden Kupplungskomponente, falls W ein Stickstoffatom bedeutet, oder, falls W die CH-Gruppe bedeutet, den Rest eines o-Hydroxyaldehyds, und

$Ka^{\oplus}$ ein Kation bedeutet.

14. Farbstoffe gemäß Anspruch 13 der Formel V, worin A der Rest eines 1-Hydroxy-2-aminobenzols ist, welcher durch Chlor, Nitro und/oder Sulfo substituiert ist, R Methyl, $R_1$ Wasserstoff, $R_2$ Methyl, Z Sauerstoff und n 1 bedeutet und die übrigen Symbole die im Anspruch 13 angegebene Bedeutung aufweisen.

15. Farbstoffe gemäß einem der Ansprüche 13 oder 14, der Formel V, worin D den Rest eines 1-Hydroxy-2-aminobenzols oder 1-Amino-2-hydroxynaphthalins darstellt, welches noch durch Nitro, Chlor und/oder Sulfo substituiert ist und K ein gegebenenfalls durch Amino und/oder Sulfo substituiertes 1- oder 2-Naphthol, 1- oder 2-Naphthylamin, gegebenenfalls substituiert durch Sulfo, p-Alkyl-($C_1$—$C_6$)-phenol, 1-Phenyl-3-methyl-5-pyrazolon oder Acetessigsäureanilid darstellt, wobei die Phenylgruppe in den beiden letztgenannten Verbindungen durch $C_1$—$C_4$-Alkyl, $C_1$—$C_4$-Alkoxy, Chlor oder Sulfo substituiert sein kann.

16. Verfahren zur Herstellung von Azofarbstoffen der Formel I gemäß Anspruch 1, dadurch gekennzeichnet, daß man eine Verbindung der Formel VI

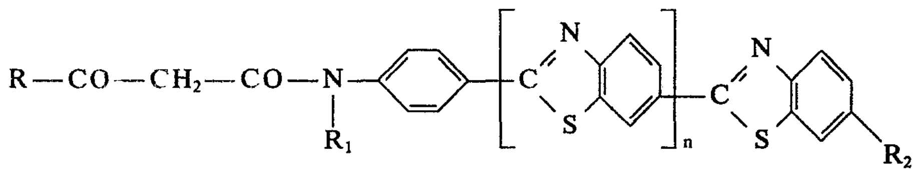

(VI)

mit einer Diazoniumverbindung eines Amins der Formel

$A-NH_2$

kuppelt, wobei die beiden Verbindungen insgesamt 0–3 Sulfogruppen enthalten und die Symbole R, $R_1$, $R_2$, n und A die unter der Formel I angegebene Bedeutung haben.

17. Verfahren zur Herstellung von Metallkomplexfarbstoffen, enthaltend mindestens einen Azofarbstoff der Formel I gemäß Anspruch 1, dadurch gekennzeichnet, daß man einen Azofarbstoff der Formel I oder ein Gemisch aus einem Azofarbstoff der Formel I und einem zweiten Azofarbstoff der Formel I und/oder einem anderen Azo- oder Azomethinfarbstoff mit einem metallabgebenden Mittel umsetzt.

18. Verfahren zum Färben von Stickstoff- und/oder Hydroxygruppen enthaltenden Materialien, insbesondere von Leder, unter Verwendung der gemäß den Ansprüchen 8 bis 15 definierten bzw. gemäß den Ansprüchen 16 oder 17 erhaltenen Metallkomplexfarbstoffe.

## Claims

1. A metallisable azo dye of the formula I

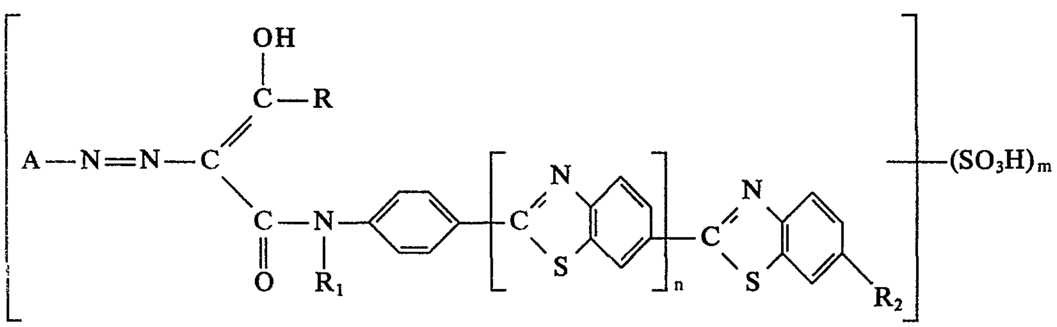

(I)

wherein

A is the radical of a diazo component of the benzene or naphthalene series, which diazo component contains in the o-position with respect to the azo group a metallisable hydroxyl group, and is unsubstituted, or carries one or more of the following substituents: low molecular alkyl or alkoxy, chlorine, bromine, nitro, cyano, sulfo, alkylsulfonyl, sulfamides, low molecular alkanoylamino, alkylsulfonylamino, alkoxycarbonylamino, sulfonylamino, aroylamino and arylsulfonylamino radicals or the azobenzene or azonaphthalene group, the aryl groups of which may in turn be substituted as described above,

R is methyl or chloromethyl, or phenyl which can be substituted by $C_1$—$C_4$alkyl, $C_1$—$C_4$alkoxy or halogen,

$R_1$ is hydrogen or $C_1$—$C_4$alkyl,

$R_2$ is hydrogen or methyl,

n is 0 or 1, and

m is 0, 1, 2 or 3.

2. A dye according to claim 1, wherein A is the radical of a 1-hydroxy-2-aminobenzene, which radical is substituted by chlorine, nitro and/or sulfo, especially the radical of a 1-hydroxy-2-aminonitrobenzene, which optionally contains a sulfo group.

3. A dye according to either of claims 1 or 2, wherein R is methyl.

4. A dye according to any one of claims 1 to 3, wherein $R_1$ is hydrogen.

5. A dye according to any one of claims 1 to 4, wherein $R_2$ is methyl.

6. A dye according to any one of claims 1 to 5, wherein n is 0.

7. A dye according to any one of claims 1 to 6 of the formula II

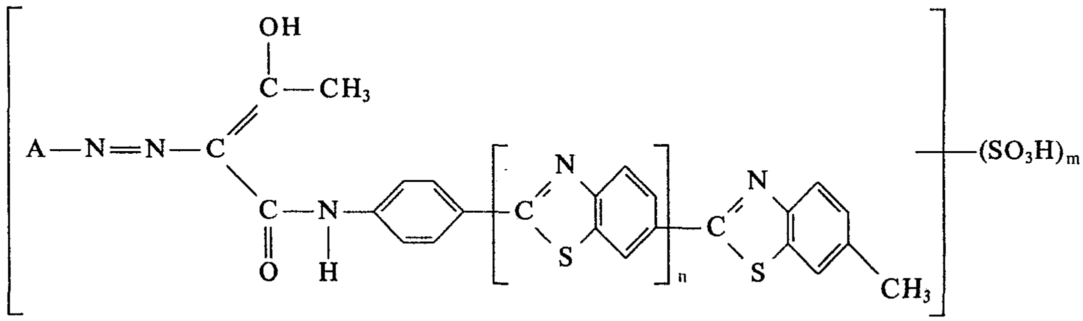

(II)

wherein

A is the radical of a 1-hydroxy-2-aminobenzene, which radical is substituted by chlorine, nitro and/or sulfo,
n is 0 or 1, and
m is 1 or 2.

8. A metal-complex dye containing at least one dye of the given formula I, wherein the metal is a heavy metal.

9. A metal-complex dye according to claim 8, wherein the metal is copper or iron, preferably cobalt or chromium.

10. A metal-complex dye of the formula III

$$F_1—Me—F_2 \qquad (III)$$

wherein

$F_1$ is a metallisable azo dye of the formula I given above,
Me is cobalt or chromium, and
$F_2$ is a metallisable azo dye of the formula I given above, which can be identical to $F_1$ or different from $F_1$, or it is any metallisable azo or azomethine dye.

11. A dye according to claim 10 of the formula IV

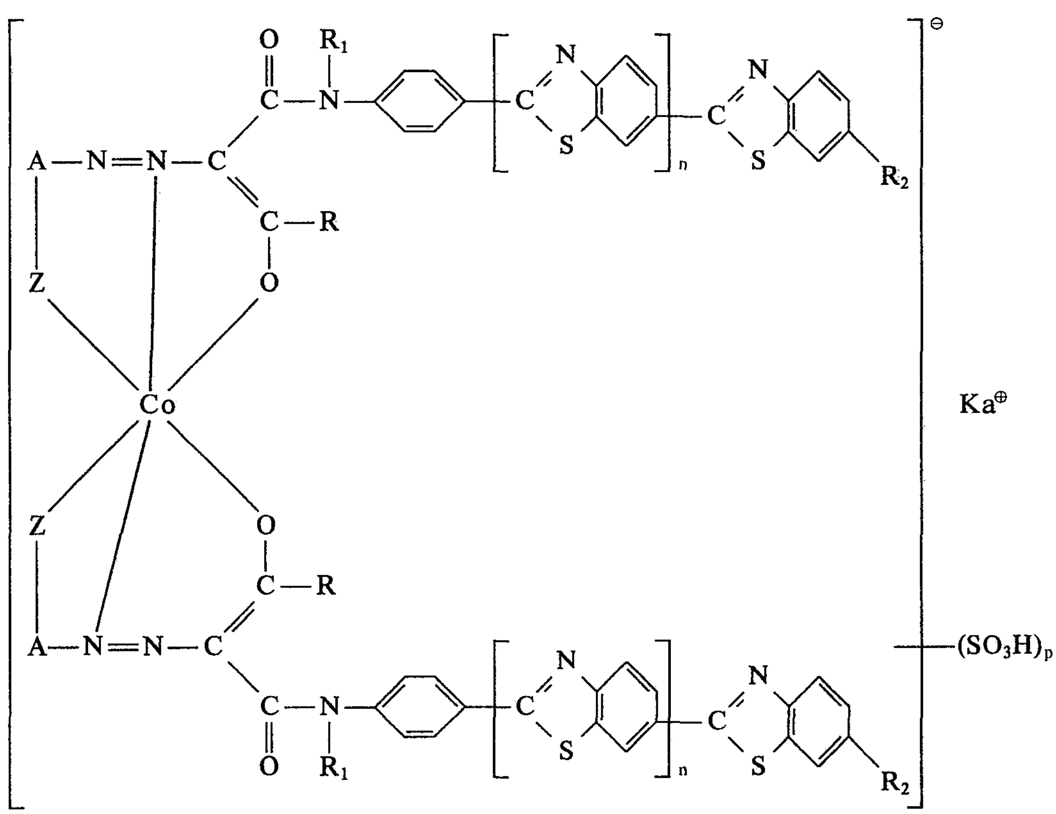

(IV)

wherein

A is the radical of a diazo component of the benzene or naphthalene series, which diazo component contains in the o-position with respect to the azo group a metallisable hydroxyl group, and is unsubstituted, or carries one or more of the following substituents: low molecular alkyl or alkoxy, chlorine, bromine, nitro, cyano, sulfo, alkylsulfonyl, sulfamides, low molecular alkanoylamino, alkylsulfonylamino, alkoxycarbonylamino, sulfonylamino, aroylamino and arylsulfonylamino radicals or the azobenzene or azonaphtalene group, the aryl groups of which may in turn be substituted as described above,
R is methyl or chlormethyl, or phenyl which can be substituted by $C_1$—$C_4$alkyl, $C_1$—$C_4$alkoxy or halogen,
$R_1$ is hydrogen or $C_1$—$C_4$alkyl,
$R_2$ is hydrogen or methyl,
n is 0 or 1,
Z is oxygen,
p is an integer from 0 to 6, and
$Ka^{\oplus}$ is a cation.

12. A dye according to claim 11 of the formula IV, wherein

A is the radical of a 1-hydroxy-2-aminobenzene, which radical is substitued by chlorine, nitro and/or sulfo,
R is methyl,
$R_1$ is hydrogen,
$R_2$ is methyl,
Z is oxygen, and
n is 1,

and the remaining symbols are as defined in claim 11.

13. A dye according to claim 8 of the formula V

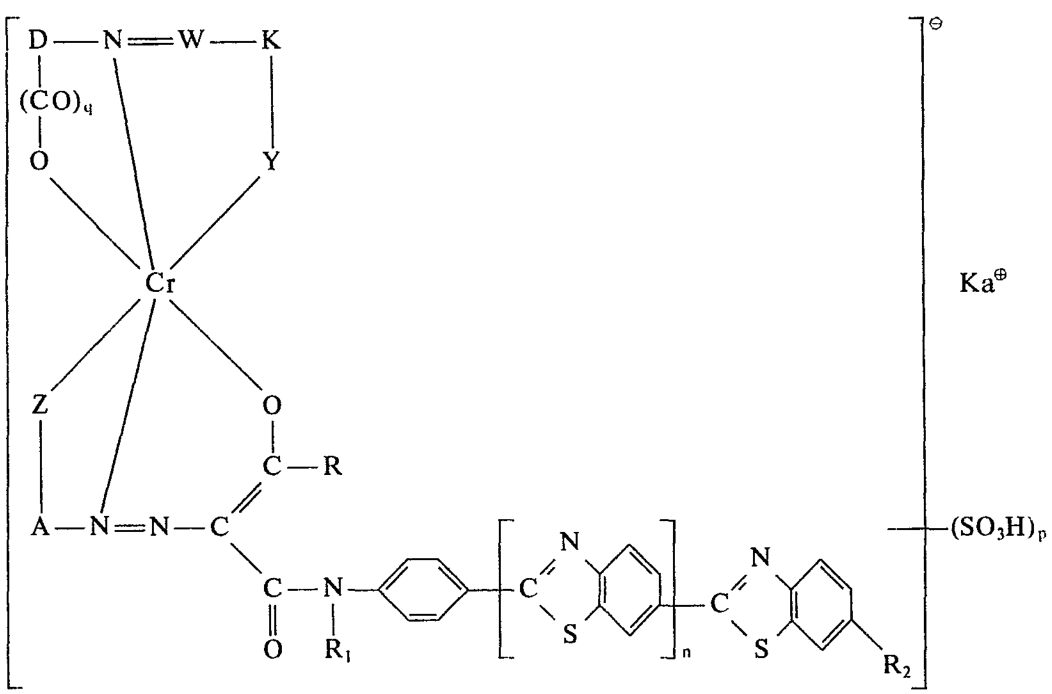

(V)

wherein

A is the radical of a diazo component of the benzene or naphthalene series, which diazo component contains in the o-position with respect to the azo group a metallisable hydroxyl group, and is unsubstituted, or carries one or more of the following substituents: low molecular alkyl or alkoxy, chlorine, bromine, nitro, cyano, sulfo, alkylsulfonyl, sulfamides, low molecular alkanoylamino, alkylsulfonylamino, alkoxycarbonylamino, sulfonylamino, aroylamino and arylsulfonylamino radicals or the azobenzene or azonaphthalene group, the aryl groups of which may in turn be substituted as described above,
R is methyl or phenyl which can be substituted by $C_1$—$C_4$alkyl, $C_1$—$C_4$alkoxy or halogen,
$R_1$ is hydrogen or $C_1$—$C_4$alkyl,
$R_2$ is hydrogen or methyl,
n is 0 or 1,
Z is oxygen
p is an integer from 0 to 6,
q is 0 or 1,
D is the radical of a diazo component of the benzene or naphthalene series, which radical contains the complex-forming hydroxyl or carboxyl group in the o-position with respect to the azo group,
W is a nitrogen atom or a CH group,
Y is an oxygen atom or an NH group, with the proviso that Y must be oxygen when W is a CH group,
K is the radical of a coupling component coupling in the o-position with respect to the hydroxyl or NH group when W is a nitrogen atom, or it is the radical of an o-hydroxyaldehyde when W is the CH group, and
$Ka^{\oplus}$ is a cation.

14. A dye according to claim 13 of the formula V wherein A is the radical of a 1-hydroxy-2-aminobenzene, which radical is substituted by chlorine, nitro and/or sulfo, R is methyl, $R_1$ is hydrogen, $R_2$ is methyl, Z is oxygen, and n is 1, and the remaining symbols are as defined in claim 13.

15. A dye according to either of claims 13 or 14 of the formula V wherein D is the radical of a 1-hydroxy-2-aminobenzene or 1-amino-2-hydroxynaphthalene, each further substituted by nitro, chlorine and/or sulfo, and K is 1- or 2-naphthol which is unsubstituted or substituted by amino and/or sulfo, or it is 1- or 2-naphthylamine which is unsubstituted or substituted by sulfo, or it is p-alkyl-($C_1$—$C_6$)phenol, 1-phenyl-3-methyl-5-pyrazolone or acetoacetic acid anilide, and the phenyl group in the two last-mentioned compounds can be substituted by $C_1$—$C_4$alkyl, $C_1$—$C_4$alkoxy, chlorine or sulfo.

16. A process for producing an azo dye of the formula I according to claim 1, which process comprises coupling a compound of the formula VI

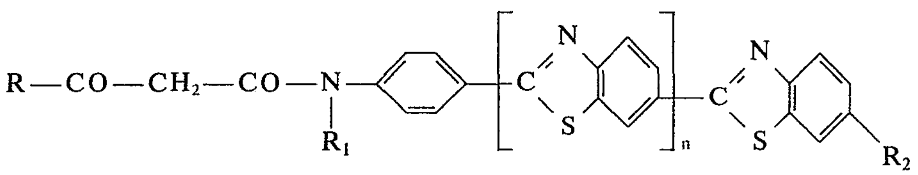

(VI)

with a diazonium compound of an amine of the formula

$A-NH_2$

the two compounds containing a total of 0—3 sulfo groups, and the symbols R, $R_1$, $R_2$, n and A being as defined for the formula I.

17. A process for producing a metal-complex dye containing at least one azo dye of the formula I according to claim 1, which process comprises reacting an azo dye of the formula I, or a mixture of an azo dye of the formula I and a second azo dye of the formula I and/or another azo or azomethine dye, with a metal donor.

18. A process for dyeing materials containing nitrogen groups and/or hydroxyl groups, particulary leather, by use of a metal-complex dye defined according to any one of claims 8 to 15, or obtained according to either of claims 16 or 17.

## Revendications

1. Colorants azoïques métallables de formule I

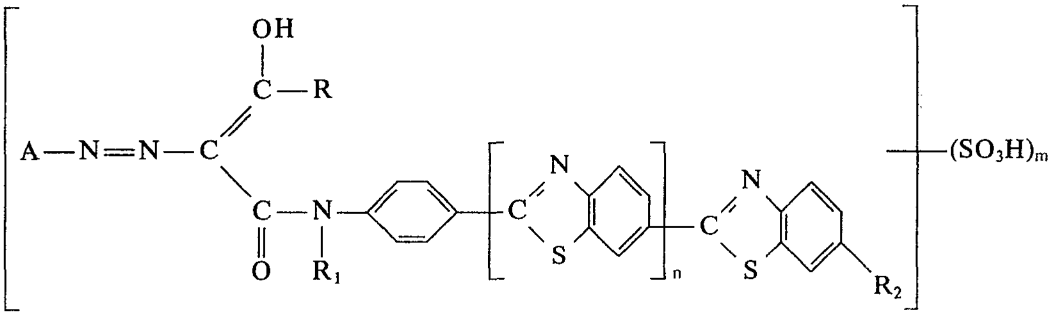

(I)

A est le résidu d'un composant de diazotation de la série du benzène ou du naphtalène, qui porte en position ortho par rapport au groupe azoïque un groupe hydroxyle métallable, et qui est non-substitué, ou porte un ou plusieurs des substituants suivants: alkyle ou alcoxy inférieur, chloro, bromo, nitro, cyano, sulfo, alkylsulfonyle, sulfamide, radicaux alcanoylamino, alkylsulfonylamino et alcoxycarbonylamino à faible masse moléculaire, sulfonylamino, aroylamino et arylsulfonylamino, ou bien le groupe azobenzène ou azonaphthalène, dont les groupes aryle peuvent, pour leur part, être substitués comme décrit ci-dessus,

R est le radical méthyle, chlorométhyle ou phényle, qui peut être substitué par un groupe alkyle en $C_1$—$C_4$, alcoxy en $C_1$—$C_4$ ou un halogène,

$R_1$ est l'hydrogène ou un radical alkyle en $C_1$—$C_4$,

$R_2$ est l'hydrogène ou le radical méthyle,

n vaut 0 ou 1, et

m vaut 0, 1, 2 ou 3.

2. Colorants selon la revendication 1, dans lesquels A est le résidu d'un 1-hydroxy-2-aminobenzène, lequel est substitué par le chlore, le groupe nitro et/ou sulfo, en particulier le résidu d'un 1-hydroxy-2-amino-nitrobenzène, qui porte éventuellement un groupe sulfo.

3. Colorants selon les revendications 1 ou 2, dans lesquels R est le radical méthyle.

4. Colorants selon des revendications 1 à 3, dans lesquels $R_1$ est l'hydrogène.

5. Colorants selon les revendications 1 à 4, dans lesquels $R_2$ est le radical méthyle.

6. Colorants selon les revendications 1 à 5, dans lesquels n vaut 0.

7. Colorants selon les revendications 1 à 6, de formule II

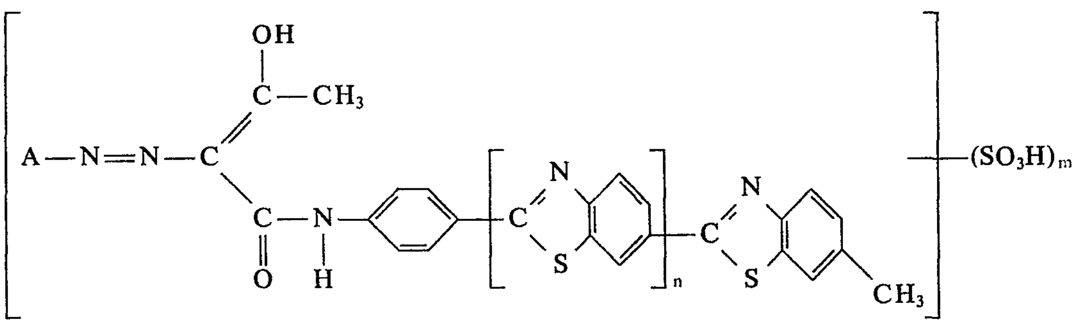

(II)

dans laquelle

A est le résidu d'un 1-hydroxy-2-aminobenzène, lequel est substitué par le chlore, un groupe nitro et/ou sulfo,

n vaut 0 ou 1, et

m vaut 1 ou 2.

8. Colorants à complexe métallifère, contenant au moins un colorant ayant la formule mentionnée I, dans lesquels le métal est un métal lourd.

9. Colorants à complexe métallifère selon la revendication 8, dans lesquels le métal est le cuivre ou le fer, de préférence le cobalt ou le chrome.

10. Colorants à complexe métallifère de formule III

$$F_1—Me—F_2 \qquad (III)$$

dans laquelle

$F_1$ est un colorant azoïque métallable ayant la formule I donnée ci-dessus,

Me est le cobalt ou le chrome, et

$F_2$ est un colorant azoïque métallable ayant la formule I donnée ci-dessus, lequel peut être identique à $F_1$ ou différent de $F_1$, ou bien un quelconque colorant azoïque ou d'azométhine métallable.

11. Colorants selon la revendication 10, de formule IV

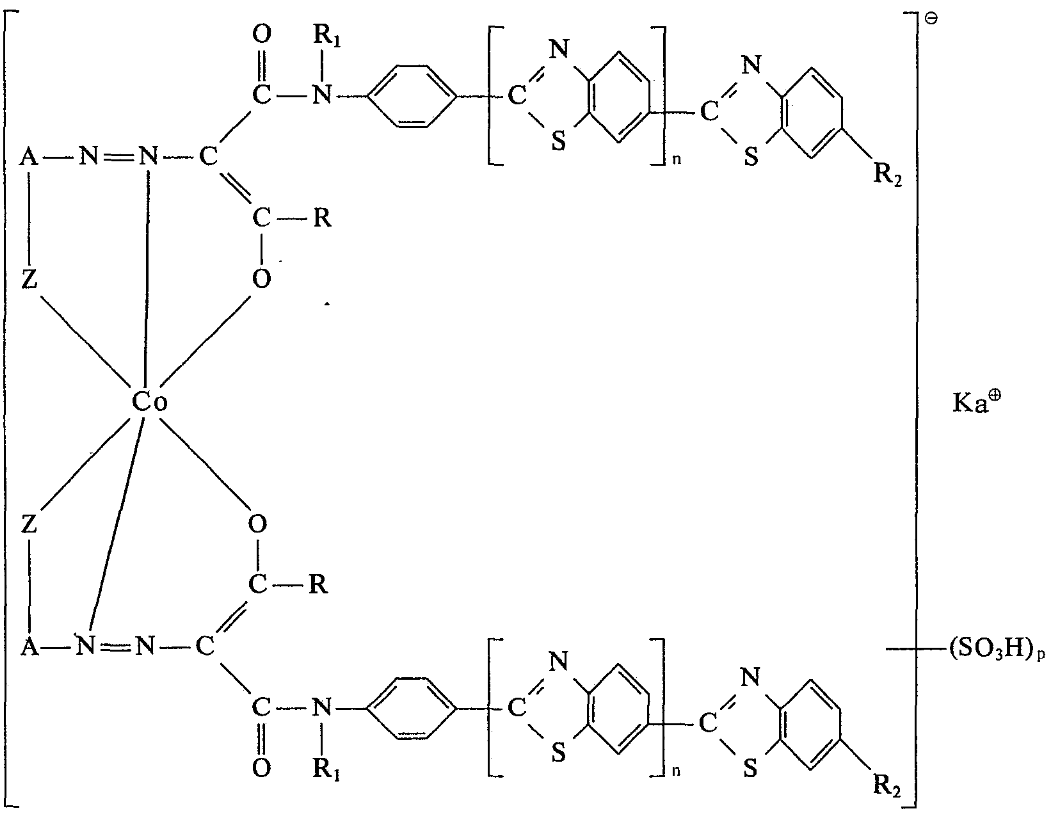

Ka$^{\oplus}$ (IV)

dans laquelle

A est le résidu d'un composant de diazotation de la série du benzène ou du naphtalène, qui porte en position ortho par rapport au groupe azoïque un groupe hydroxyle métallable, et qui est non-substitué, ou bien porte un ou plusieurs des substituants suivants: alkyle ou alcoxy inférieur, chloro, bromo, nitro, cyano, sulfo, alkylsulfonyle, sulfamide, des radicaux alcanoylamino, alkylsulfonylamino et alcoxycarbonylamino à faible masse moléculaire, sulfonylamino, aroylamino et arylsulfonylamino, ou le groupe azobenzène ou azonaphtalène, dont les groupes aryle peuvent, pour leur part, être substitués comme décrit ci-dessus,
R est le radical méthyle, chlorométhyle ou phényle, qui peut être substitué par un groupe alkyle en $C_1$—$C_4$, alcoxy en $C_1$—$C_4$ ou un halogène,
$R_1$ est l'hydrogène ou un groupe alkyle en $C_1$—$C_4$,
$R_2$ est l'hydrogène ou le radical méthyle,
n vaut 0 ou 1,
Z est l'oxygène,
p est un nombre entier entre 0 et 6, et
Ka$^{\oplus}$ est un cation.

12. Colorants selon la revendication 11, de formule IV, dans laquelle

A est le résidu d'un 1-hydroxy-2-aminobenzène, lequel est substitué par le chlore, un radical nitro et/ou sulfo,
R est le radical méthyle,
$R_1$ est l'hydrogène,
$R_2$ est le radical méthyle,
Z est l'oxygène et
n vaut 1,

et les autres symboles ont la signification donnée dans la revendication 11.

13. Colorants selon la revendication 8, de formule V

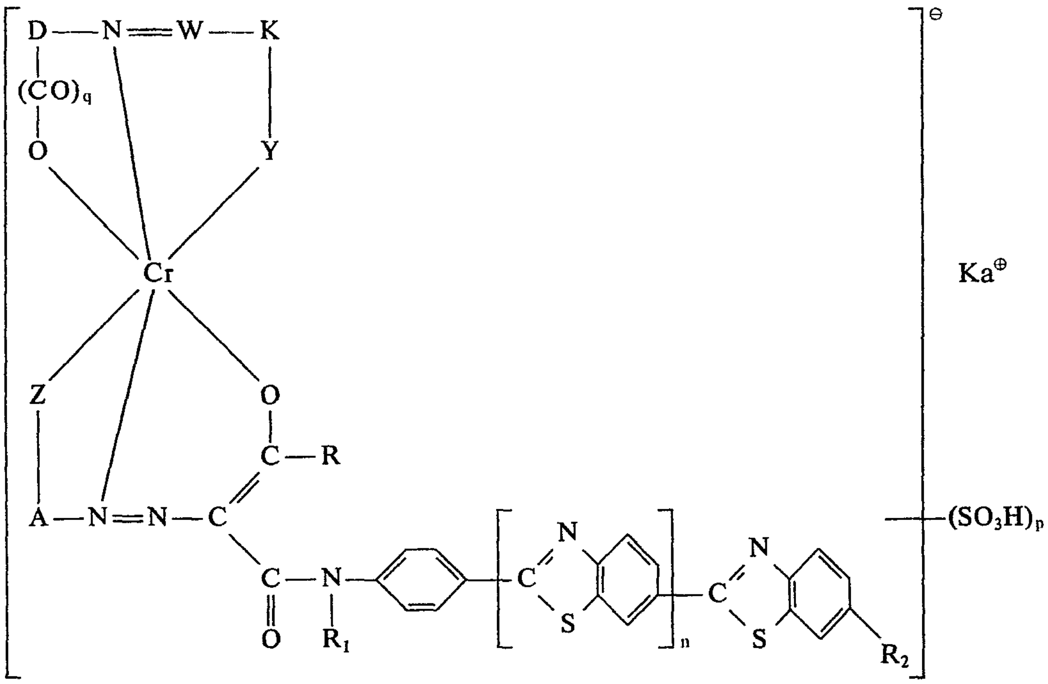

Ka⊕ (V)

dans laquelle

A est le résidu d'un composant de diazotation de la série du benzène ou du naphtalène, qui porte en position ortho par rapport au groupe azoïque un groupe hydroxyle métallable, et qui est non-substitué, ou bien porte un ou plusieurs des substituants suivants: alkyle ou alcoxy inférieur, chloro, bromo, nitro, cyano, sulfo, alkylsulfonyle, sulfamide, des radicaux alcanoylamino, alkylsulfonylamino et alcoxycarbonylamino à faible masse moléculaire, sulfonylamino, aroylamino et arylsulfonylamino, ou le groupe azobenzène ou azonaphtalène, dont les groupes aryle peuvent, pour leur part, être substitués comme décrit ci-dessus,

R est le radical méthyle, chlorométhyle ou phényle, lequel peut être substitué par un radical alkyle en $C_1$—$C_4$, alcoxy en $C_1$—$C_4$ ou un halogène,

$R_1$ est l'hydrogène ou un radical alkyle en $C_1$—$C_4$,

$R_2$ est l'hydrogène ou le radical méthyle,

n vaut 0 ou 1,

Z est l'oxygène,

p est un nombre entier entre 0 et 6,

q vaut 0 ou 1,

D est le résidu d'un composant de diazotation de la série du benzène ou du naphtalène, lequel porte, en position ortho par rapport au groupe azoïque, le groupe complexant hydroxyle ou carboxyle,

W est un atome d'azote ou un groupe CH,

Y est un atome d'oxygène ou un groupe NH, Y devant être l'oxygène quand W est un groupe CH,

K est le résidu d'un composant de copulation copulant en position ortho par rapport au groupe hydroxyle ou NH si W est un atome d'azote ou bien, si W est le groupe CH, le résidu d'un o-hydroxyaldéhyde, et

Ka⊕ est un cation.

14. Colorants selon la revendication 13, de formule V, dans laquelle A est le résidu d'un 1-hydroxy-2-aminobenzène, lequel est substitué par le chlore, un groupe nitro et/ou sulfo; R est le radical méthyle; $R_1$ est l'hydrogène; $R_2$ est le radical méthyle; Z est l'oxygène; et n vaut 1, et les autres symboles ont la signification donnée dans la revendication 13.

15. Colorants selon l'une des revendications 13 ou 14 de formule V, dans laquelle D est le résidu d'un 1-hydroxy-2-aminobenzène ou d'un 1-amino-2-hydroxynaphtalène, lequel est encore substitué par un substituant nitro, chlore et/ou sulfo, et K est un 1- ou 2-naphtol éventuellement substitué par un groupe amino et/ou sulfo, une 1- ou 2-naphtylamine, éventuellement substituée par un groupe sulfo, un p-(alkyl en $C_1$—$C_6$)-phénol, la 1-phényl-3-méthyl-5-pyrazolone ou l'acétylacétanilide, le groupe phényle, dans les deux composés mentionnés en dernier, pouvant être substitué par un groupe alkyle en $C_1$—$C_4$, alcoxy en $C_1$—$C_4$, chloro ou sulfo.

16. Procédé pour la préparation de colorants azoïques de formule I selon la revendication 1, caractérisé en ce qu'on copule un composé de formule VI

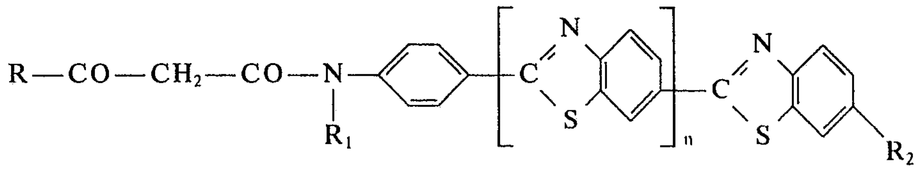

(VI)

avec un composé de diazonium d'une amine de formule

$A—NH_2$

les deux composés contenant en tout 0—3 groupes sulfo, et les symboles R, $R_1$, $R_2$, n et A ayant la signification donnée pour la formule I.

17. Procédé pour la préparation de colorants à complexe métallifère contenant au moins un colorant azoïque de formule I selon la revendication 1, caractérisé en ce qu'on fait réagir un colorant azoïque de formule I ou un mélange d'un colorant azoïque de formule I et d'un deuxième colorant azoïque de formule I et/ou d'un autre colorant azoïque ou d'azométhine, sur une substance cédant un métal.

18. Procédé pour la teinture de matières contenant des groupes azotés et/ou hydroxyle, en particulier de cuir, par l'utilisation des colorants à complexe métallifère définis dans les revendications 8 à 15 ou obtenus selon les revendications 16 ou 17.